# EUROPÄISCHE PATENTSCHRIFT

(11) **EP 1 091 863 B1**
(45) Veröffentlichungstag und Bekanntmachung des Hinweises auf die Patenterteilung: **16.01.2002**
(21) Anmeldenummer: 99939950.4
(22) Anmeldetag: 23.06.1999
(51) Int. Cl.: B60N 2/08, B60N 2/44

(54) **STUFENLOSER MANUELLER ANTRIEB**
CONTINUOUSLY VARIABLE MANUAL DRIVE
ENTRAINEMENT MANUEL CONTINU

(30) Priorität: 01.07.1998 DE 19831205
(43) Veröffentlichungstag der Anmeldung: 18.04.2001
(73) Patentinhaber: Brose Fahrzeugteile GmbH & Co. KG Coburg, 96450 Coburg (DE)
(72) Erfinder: SCHUMANN, Peter, D-96253 Untersiemau (DE)
(74) Vertreter: Müller, Wolfram Hubertus, Dipl.-Phys.
(86) Internationale Anmeldenummer: DE9901857
(87) Internationale Veröffentlichungsnummer: WO0001553

(56) Entgegenhaltungen:
- EP-A- 0 549 082
- EP-A- 0 631 901
- WO-A-98/25791
- DE-A- 2 653 890
- DE-A- 3 438 335
- DE-A- 4 120 617
- DE-A- 19 527 912
- DE-C- 19 547 513

## Beschreibung

Die Erfindung betrifft stufenlose manuelle Antriebe für Sitzverstellungen nach dem Oberbegriff der Ansprüche 1 und 23 und die Verwendung derartiger Antriebe für Sitzlängsverstellungen in Kraftfahrzeugen.

Ein Antrieb gemäß dem Oberbegriff des Anspruchs 1 ist aus der EP 0 549 082 A1 bekannt, die einen stufenlosen Linearantrieb für ein Schienenführungssystem für Kraftfahrzeugsitze mit zwei in Längsrichtung gegeneinander verschiebbaren und miteinander verbundenen Schienen beschreibt. Die Schienen schließen zwischen sich einen Hohlraum ein, in dem ein mit der einen Schiene verbundenes Verschiebeelement angeordnet ist. Das Verschiebeelement greift in eine in Schienenlängsrichtung verlaufende Verzahnung ein, mit der die andere Schiene versehen oder verbunden ist. Bei dem bekannten Linearantrieb erfolgt ein Antrieb allerdings motorisch, wozu ein Antriebsmotor und eine entsprechende Steuerung und Stromversorgung erforderlich sind.

Ein Antrieb gemäß der Oberbegriff des Anspruchs 23 ist aus der WO 98/25791 A1 bekannt. Eine Sitzverstellung erfolgt unter Verwendung eines Schrittschaltwerks, das eine Antriebskraft auf ein abtriebsseitiges Getriebeelement überträgt. Im Kraftfluß zwischen dem Schrittschaltwerk und dem abtriebsseitigen Getriebeelement ist eine Sperrvorrichtung angeordnet, die eine abtriebsseitige Drehmomentübertragung sperrt, eine antriebsseitige Drehmomentübertragung dagegen ermöglicht. Zusätzlich ist einem Ausführungsbeispiel eine Übersetzung der Antriebs- und der Abtriebsseite des Schrittschaltwerks vorgesehen, durch die die Antriebskraft bzw. der Verstellweg eingestellt werden kann.

Ein beidseitig wirkender Antrieb manueller Antrieb für Sitzverstellungen in Kraftfahrzeugen unter Verwendung eines Schrittschaltwerks ist des weiteren aus der DE 195 27 912 A1 bekannt, bei der ein Antriebshebel auf einer Antriebsachse gelagert ist und schwenkbare Verriegelungelemente trägt, deren mit Verzahnungselementen versehene freie Enden zur Kraftübertragung mit einer auf dem Umfang eines Antriebsrades angeordneten Verzahnung in Eingriff bringbar sind.

Aus der DE 41 20 617 C2 ist eine Verbindung zwischen einem Antrieb und einem Abtrieb mit einer Sperrkupplung bekannt, bei der ein antriebsseitiges Drehmoment in beide Drehrichtungen auf ein Abtriebselement übertragen wird, während ein abtriebsseitiges Drehmoment in beide Drehrichtungen durch die Sperrkupplung blockiert und demzufolge nicht auf das Antriebselement übertragen wird.

Die bekannten Schrittschaltwerke finden im Kraftfahrzeugbereich typischerweise Anwendung in Einrichtungen zur Sitzhöhen- oder Sitzneigungsverstellung. Sie sind dafür ausgerichtet, über einen kurzen Weg eine große Kraft auf ein Verstellgetriebe zu übertragen, wie sie insbesondere zum Aufwärtsbewegen eines Sitzes erforderlich ist, auf dem der Nutzer des Fahrzeugsitzes sich befindet.

Der Erfindung liegt die Aufgabe zugrunde, einen Antrieb für Sitzlängsverstellungen zur Verfügung zu stellen, der eine stufenlose Verstellung eines Fahrzeugsitzes erlaubt, dabei stets eine crashsichere Verbindung der beiden Schieneneinrichtungen des Fahrzeugsitzes sicherstellt und sich zudem durch einen einfachen und kostengünstigen Aufbau und ein möglichst hohes Maß an individueller Einstellbarkeit einer Verstellbewegung auszeichnet. Zusätzlich soll ein stufenloser manueller Antrieb für Sitzverstellungen zur Verfügung gestellt werden, der vielseitig einsetzbar ist und es ermöglicht, eine Antriebsbewegung angepaßt an die Begebenheiten am Sitz und in Abhängigkeit von den Erfordernissen einer vorzunehmenden Verstellung in eine Verstellbewegung umzusetzen.

Diese Aufgaben werden erfindungsgemäß durch einen Antrieb mit den Merkmalen des Anspruchs 1 und einen Antrieb mit den Merkmalen des Anspruchs 23 gelöst. Vorteilhafte und bevorzugte Ausgestaltungen der Erfindungen sind in den Unteransprüchen angegeben.

Danach ist ein erster erfindungsgemäßer Antrieb dadurch gekennzeichnet, daß der Antrieb ein manuelles Schrittschaltwerk aufweist, das über einen Antriebshebel antreibbar ist. Zusätzlich sind eine Sperrvorrichtung, die eine abtriebsseitige Drehmomentübertragung sperrt, eine antriebsseitige Drehmomentübertragung dagegen ermöglicht, und mindestens eine Übersetzungsstufe vorgesehen, die antriebsseitig oder abtriebsseitig mit dem Schrittschaltwerk gekoppelt ist.

Bei einem erfindungsgemäßen Antrieb mit Schrittschaltwerk für eine Sitzlängsverstellung wird das Übersetzungsverhältnis der Übersetzungsstufe derart gewählt, daß die Drehzahl des Abtriebselementes größer ist als die Drehzahl der Antriebswelle, so daß auch mit einem beidseitig betätigbaren Antriebshebel, wie er bisher nur für Sitzhöhen- und Sitzneigungsverstellungen Verwendung fand, eine effektive Sitzlängsverstellung durchgeführt werden kann.

Da das abtriebsseitige Getriebeelement stets mit der einen Schieneneinrichtung in Eingriff steht und durch manuelles Betätigen des Antriebshebels kontinuierlich in die eine oder andere Richtung entlang der Schieneneinrichtung bewegt wird, stellt diese Lösung einen stufenlosen Antrieb zur Verfügung, der eine präzise Einstellung der Sitzlängsposition ermöglicht, auch wenn es sich um nur kleine Verstellwege handelt.

Ein weiterer Vorteil des erfindungsgemäßen Antriebs zur Sitzlängsverstellung besteht darin, daß auch während eines Verstellvorganges ein hohes Maß an Crashsicherheit besteht, da das abtriebsseitige Getriebeelement stets mit der einen Schieneneinrichtung in Eingriff steht und eine durch äußere Kräfte bedingte Verschiebung des Sitzes durch die Bremsvorrichtung sicher verhindert wird. Durch Verwendung eines aktiven, manuell betätigbaren Schrittschaltwerks anstatt einer motorischen Verstellung wird zusätzlich eine einfache und kostengünstige Lösung zur Verfügung gestellt.

Die Schienenreibung und der Steigungswinkel der Schienen sind bei einer Längsverstellung vernachlässigbar und behindern nicht eine präzise Längeneinstellung. Dies ermöglicht es gegebenenfalls sogar, den Steigungswinkel der Schienen so groß zu wählen, daß auf eine gesonderte Sitzhöhenverstellung verzichtet werden kann. So wird über den Steigungswinkel der Sitzschienen eine Längs- und Höhenverstellung gekoppelt.

Die erfindungsgemäß vorgesehene Übersetzungsstufe kann an mehreren Stellen des Antriebes vorgesehen sein. In einer ersten bevorzugten Ausgestaltung ist die Übersetzungsstufe zwischen einem Antriebshebel und dem Schrittschaltwerk ausgebildet. Beispielsweise erfolgt eine Kraftübertragung vom Antriebshebel auf das Schutzschaltwerk über ein Zahnsegment, das auf der Drehachse des Antriebshebels gelagert ist und in ein auf der Antriebsachse des Schrittschaltwerkes gelagertes Formschlußelement, insbesondere Ritzel, eingreift. Die Antriebsachse des Schrittschaltwerkes und die Drehachse des Antriebshebels verlaufen dabei parallel.

In einer anderen bevorzugten Ausgestaltung ist die Übersetzungsstufe zwischen dem Schrittschaltwerk und der Sperrvorrichtung ausgebildet. Hierzu ist bevorzugt wiederum ein Übersetzungselement vorgesehen, das sowohl mit dem Schrittschaltwerk als auch mit der Bremsvorrichtung gekoppelt ist, und das insbesondere in ein auf der Achse der Bremsvorrichtung gelagertes Formschlußelement eingreift. Bevorzugt wird das Übersetzungselement dabei durch die Außenverzahnung eines bei einem Schrittschaltwerk üblicherweise vorgesehenen Antriebsrades ausgebildet.

In einer weiteren Ausgestaltung ist die Übersetzungsstufe zwischen der Sperrvorrichtung und dem abtriebsseitigen Getriebeelement ausgebildet. Eine Kraftübertragung von der Sperrvorrichtung auf das abtriebsseitige Getriebeelement erfolgt mittels eines Übersetzungselements, das zum einen mit der Sperrvorrichtung und zum anderen mit dem abtriebsseitigen Getriebeelement gekoppelt ist. Das Übersetzungselement ist bevorzugt als Ritzel ausgebildet, das auf der Antriebsachse des Schrittschaltswerkes gelagert ist und mit dem abtriebsseitigen Getriebeelement kämmt. Die Achsen von dem Überstetzungselement und abtriebsseitigem Getriebeelement verlaufen dabei parallel.

Im Sinne der Erfindung wird als Sperrvorrichtung jede Vorrichtung verstanden, die die Wirkung hat, daß abtriebsseitig eingeleitete Kräfte gesperrt werden. Eine derartige Sperrvorrichtung ist einer bevorzugten Ausgestaltung eine Bremsvorrichtung, wie sie aus der DE 41 20 617 A1 bekannt ist.

Jedoch wird unter einer Sperrvorrichtung erfindungsgemäß ebenfalls ein selbsthemmendes Getriebe verstanden, das abtriebsseitig eingeleitete Kräfte hemmt. Ein derartiges selbsthemmendes Getriebe ist beispielsweise ein Taumelgetriebe, das dem Fachmann bekannt ist.

Unter Schrittschaltwerk wird jede Antriebsvorrichtung verstanden, die eine zeitlich unterbrochene (schrittweise) Bewegung, insbesondere Drehbewegung, eines Abtriebselements erzeugt. Dabei liegt eine Antriebskraft in der Regel ebenfalls zeitlich unterbrochen an.

Ein zweiter erfindungsgemäßer Antrieb für Sitzverstellungen in Kraftfahrzeugen ist derart ausgebildet, daß ein antriebsseitiges Schrittschaltwerk und abtriebsseitige Getriebeelemente durch eine Kupplungsvorrichtung miteinander verbunden sind, die im nichtbetätigten Zustand den Kraftfluß zwischen dem Antrieb und den abtriebsseitigen Getriebeelementen mittels Federvorspannung schließt und im betätigten Zustand die Verbindung zwischen dem Antrieb und den abtriebsseitigen Getriebeelementen unterbricht. Hierdurch wird erreicht, daß im betätigten Zustand eine passive Sitzverstellung möglich ist, während im nichtbetätigten Zustand eine aktive Verstellung durch das Schrittschaltwerk erfolgt.

Es wird einem Nutzers somit die Möglichkeit einer Schnellverstellung zur Verfügung gestellt, etwa um einen Fahrzeugsitz beim Ein- und Aussteigen schnell in die vordere oder hintere Position verfahren zu können, während eine Feinverstellung mittels des Schrittschaltwerks erfolgt. Damit liegt ein sehr hohes Maß an individueller Einstellbarkeit eines Verstellvorgangs vor. Durch die Entkopplung der abtriebsseitigen Getriebeelemente vom Antrieb im betätigten Zustand können diese frei entlang der einen Schieneneinrichtung, etwa in einer Längsverzahnung, laufen, ohne daß eine Drehung bzw. Bewegung der abtriebsseitigen Getriebeelemente durch eine dem Schrittschaltwerk zugeordnete Bremsvorrichtung blockiert würde.

Zum Schalten der Kupplungsvorrichtung sind in einer bevorzugten Ausgestaltung der Erfindung eine axial verschiebbare Hülse und ein mit dieser in Verbindung stehendes Entkopplungs-Bedienelement vorgesehen, wobei die Hülse bei Betätigung des Entkopplungs-Bedienelements entgegen einer Federvorspannung axial verschoben wird und dabei die Kopplung zwischen dem Antrieb und dem abtriebsseitigen Getriebeelement unterbricht. Etwa werden durch die axiale Verschiebung der Hülse Formschlußelemente korrespondierender Kupplungsbereiche außer Eingriff gebracht, insbesondere mit Formschlußelementen versehene Federelemente derart ausgelenkt, daß die Formschlußelemente außer Eingriff geraten. Durch Betätigung des Entkopplungs-Bedienelements ist auf für den Nutzer einfache Weise möglich, eine passive Schnellverstellung vorzunehmen.

Je nach Zugänglichkeit des Entkopplungs-Bedienelements kann es erforderlich sein, dem Entkopplungs-Bedienelement ein Schaltelement zuzuordnen, bei dessen Betätigung der Kopplungs- bzw. Entkopplungsvorgang ausgelöst wird. Dabei handelt es sich etwa um einen Druckknopf, der bevorzugt in den Antriebshebel integriert ist, so daß eine aktive Verstellung und eine passive Schnellverstellung am gleichen Bedienelement auslösbar bzw. vornehmbar sind.

Der erfindungsgemäße stufenlose Antrieb nach Anspruch 23 ist bevorzugt derart ausgebildet, daß die Kupplungsvorrichtung Formschlußelemente oder Reibschlußelemente zur Ausführung des Kupplungsvorgangs aufweist. Die Kupplungsvorrichtung weist dabei einen ersten Kupplungsbereich, der Bestandteil eines abtriebsseitigen Getriebeelements ist, und einen zweiten Kupplungsbereich, der Bestandteil eines Elements des Schrittschaltwerks oder einer mit dem Schrittschaltwerk gekoppelten Bremsvorrichtung ist, auf.

Bevorzugt weist die Kupplungsvorrichtung ein einstückiges, bezüglich der Antriebsachse axialwirkendes oder radialwirkendes Federelement mit abtriebsseitigen und mit antriebsseitigen Formschlußelementen auf. Bei einem Entkopplungsvorgang wird eine der Vorspannung des Federelements entgegengerichtete Kraft in axialer bzw. radialer Richtung auf das Federelememt ausgeübt, wodurch die antriebsseitigen Formschlußelemente des Federelements mit korrespondieren Formschlußelementen etwa der Bremsvorrichtung außer Eingriff geraten.

In einer bevorzugten Ausgestaltung der Erfindung ist das Federelement nach Art einer Tellerfeder ausgebildet, dessen Federbereich in mehrere separat federnde Segmente mit verzahnten freien Enden aufgeteilt ist, die mit mit zugeordneten Formschlußelementen eines abtriebsseitigen Getriebeelements oder eines zum Schrittschaltwerk gehörenden Teils kuppelbar in Verbindung stehen. Eine von der Kreisform abweichende Kontur des Basisfläche des Federelements ist einem Formschlußelement des entsprechenden anderen Teils zugeordnet und mit diesem formschlüssig verbunden.

Die Verzahnungen benachbarter Segmente der Tellerfeder sind bevorzugt um einen Bruchteil der Verzahnungsteilung gegeneinander versetzt. Hierdurch wird gewährleistet, daß es nach einem Verstellvorgang nur eines Bruchteils der Zahnteilung bedarf, bis ein erneuter Formschluß der korrespondierenden Formschlußelemente der Tellerfeder und des Schrittschaltwerks bzw. der Bremsvorrichtung erfolgt. Nach einer Schnellverstellung rastet ein Fahrzeugsitz somit in jeder beliebigen Raststellung sogleich wieder ein. Dabei weisen zur Gewährleistung einer sicheren Kraftübertragung auf das abtriebsseitige Getriebeelement jeweils zwei gegenüberliegender Segmente der Tellerfeder keinen Versatz zueinander auf, so daß im nichtbetätigten Zustand immer zwei Segmente der Tellerfeder in Eingriff mit den zugeordneten Formschluβelementen stehen.

In einer bevorzugten Ausgestaltung des Antriebs ist das Schrittschaltwerk als beidseitig wirkender Antrieb zur Erzeugung einer Drehbewegung ausgebildet, die wahlweise ausgehend von einer Nullpunkt-Lage des Antriebshebels in die eine oder andere Antriebsrichtung erfolgt, wobei das mit der zweiten Schieneneinrichtung gekoppelte abtriebsseitige Getriebeelement nur dann gedreht wird, wenn sich der Antriebshebel von der Nullpunkt-Lage weg bewegt, während bei einer Bewegung des Antriebshebels in Richtung der Nullpunkt-Lage keine Drehung des abtriebsseitigen Getriebeelementa und damit keine Linearverstellung erfolgt. Derartige Antriebe zeichnen sich dadurch aus, daß der Nutzer durch Betätigung des Antriebshebels in die eine oder andere Schwenkrichtung unmittelbar einen Verstellvorgang vornehmen und beeinflussen kann.

Bei Verwendung des erfindungsgemäßen Antriebs für eine Längsverstellung kann der Antrieb auf vielfältige Art eine Kopplung eines abtriebsseitigen Getriebeelements mit der einen Schieneneinrichtung verwirklichen. Etwa ist das abtriebsseitige Getriebeelement als Ritzel oder als Schnekke ausgebildet, das bzw. die in eine längs verlaufende Zahnstange der Schieneneinrichtung eingreift. Alternativ ist das abtriebsseitige Getriebeelement als Spindelmutter ausgebildet bzw. mit einer Spindelmutter verbunden, die in eine längs verlaufende Spindel der Schieneneinrichtung eingreift. Auch liegt es im Rahmen der Erfindung, das abtriebsseitige Getriebeelement als Seilrolle auszubilden, die mit einem in Längsrichtung der zweiten Schieneneinrichtung gespannten Seil verbunden ist und entlang des Seils verfahrbar ist.

Die Erfindung wird nachfolgend unter Bezugnahme auf die Figuren der Zeichnung anhand mehrerer Ausführungsbeispiele näher erläutert. Es zeigen:
- Figur 1 -: eine Schnittansicht eines stufenlosen manuellen Linearantriebs in Verbindung mit einer Sitzschiene;
- Figur 2 -: eine Draufsicht auf den Linearantrieb der Figur 1;
- Figur 3 -: eine Seitenansicht des Linearantriebs der Figur 1;
- Figur 4a -: eine antriebsseitige Draufsicht auf das Schrittschaltwerk des Linearantriebs der Figur 1;
- Figur 4b -: eine antriebsseitige Draufsicht auf das Schrittschaltwerk des Linearantriebs der Figur 1, wobei die Hebelplatte nicht dargestellt ist;
- Figur 5 -: eine Schnittansicht einer alternativen Ausgestaltung eines Linearantriebs für eine Sitzlängsverstellung, die zusätzlich eine Schnellverstellung ermöglicht;
- Figur 6 -: eine schematische Darstellung einer als Kupplungsvorrichtung dienenden Tellerfeder eines Verstellantriebs gemäß Figur 5;
- Figur 7 -: eine alternative Ausführung der Tellerfeder der Figur 6;
- Figur 8 -: eine schematische Darstellung eines Flügelteils der Bremsvorrichtung, das zur Übertragung von Drehmomenten mit der Tellerfeder der Figuren 6 oder 7 in Eingriff bringbar ist;
- Figur 9 -: einen radialen Schnitt durch die Bremsvorrichtung des Antriebs der Figuren 1 und 5;
- Figur 10 -: eine schematische Darstellung eines Flügelteils der Bremsvorrichtung, das zur Übertragung von Drehmomenten einen Kupplungsbereich mit Formschlußelementen aufweist und
- Figur 11 -: einen Schnitt durch ein Abtriebselement, das einen zum Kopplungsbereich des Flügelteils der Figur 10 korrespondierenden Kopplungsbereich aufweist.
- Figur 12 -: eine Schnittansicht einer zweiter Ausführung eines stufenlosen manuellen Linaerantriebs in Verbindung mit einer Sitzschiene und
- Figur 13 -: eine Schnittansicht einer dritten Ausgestaltung eines stufenlosen manuellen Linearantriebs in Verbindung mit einer Sitzschiene.

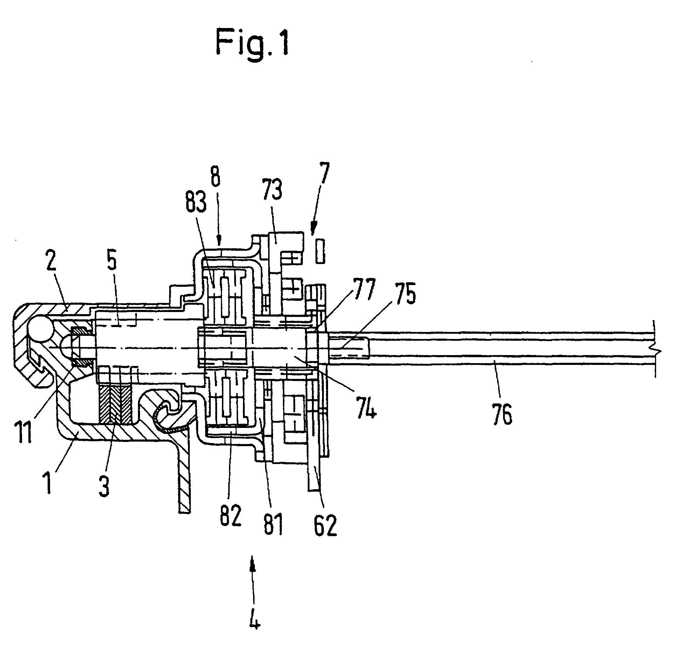

Figur 1 zeigt im Querschnitt eine manuell betätigbare, aktive Sitzlängsverstellung. Die Sitzlängsverstellung weist als in Längsrichtung gegeneinander verschiebbare Verstellelemente eine mit dem Karosserieboden des Kraftfahrzeugs (nicht dargestellt) verbundene Unterschiene 1 und eine mit dem Fahrzeugsitz verbundene Oberschiene 2 auf. Oberschiene 2 und Unterschiene 1 sind in an sich bekannter Weise miteinander verhakt, wodurch eine sichere Verbindung zwischen der Unterschiene 1 und Oberschiene 2 auch im Crashfall hergestellt wird.

Die Unterschiene 1 weist eine Verzahnung auf, die in Form einer Zahnstange 3 ausgebildet ist. Zur Verstellung der Oberschiene 2 gegenüber der Unterschiene 1 ist ein mit der Oberschiene 2 verbundener Linearantrieb 4 vorgesehen, der als abtriebsseitiges Getriebeelement ein Abtriebsritzel 5 aufweist, das mit der Verzahnung der Zahnstange 3 kämmt. Das Abtriebsritzel 5 stützt sich dabei drehbar an einem Lagerpunkt 11 der Unterschiene 1 ab.

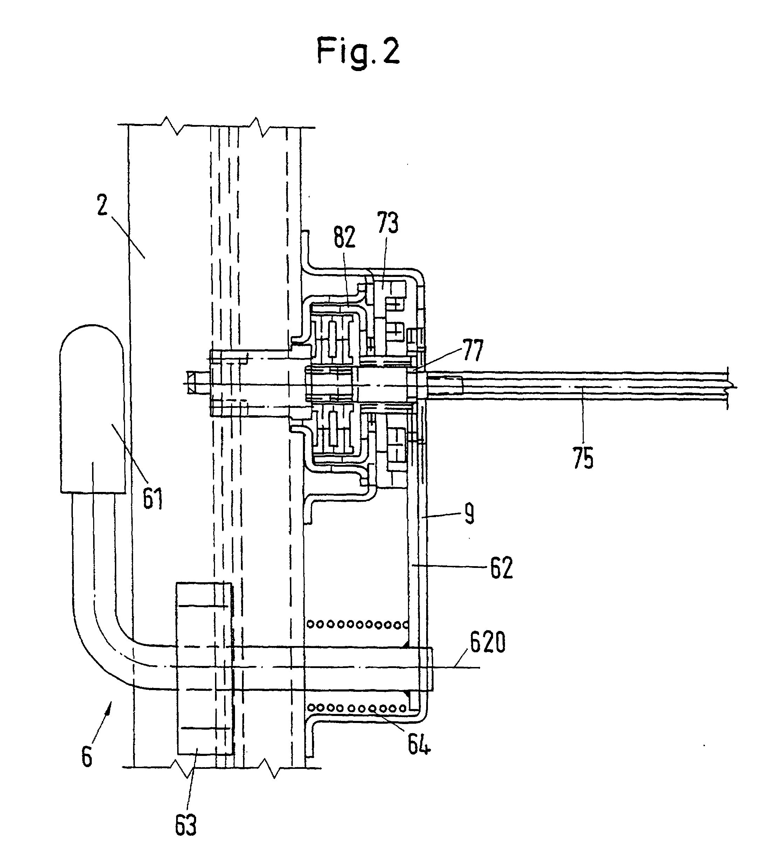

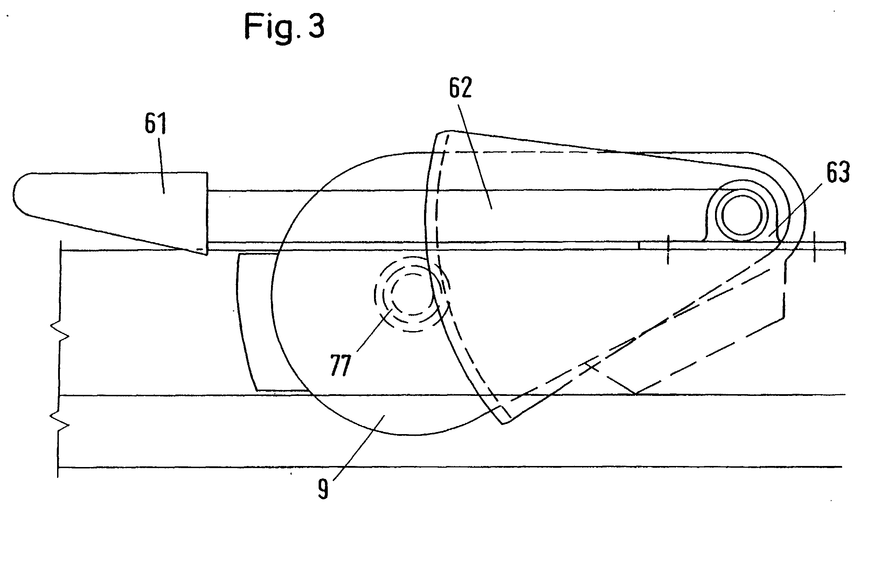

Der Linearantrieb 4 weist als wesentliche Funktionseinheiten Antriebsmittel 6, ein Schrittschaltwerk 7 und eine Bremseinrichtung 8 auf. Wie insbesondere den Figuren 2 und 3 zu entnehmen ist, bestehen die Antriebsmittel 6 aus einem Antriebshebel 61 und einem Antriebssegment 62, die U-förmig miteinander verbunden sind, so daß der Antriebshebel 61 parallel und seitlich der Sitzschienen 1, 2 verläuft und damit für einen Nutzer leicht zugänglich ist. Der Antriebshebel 61 stützt sich an einem Lagerblock 63 ab, der auf der Sitzoberschiene 2 befestigt ist. Der Antriebshebel 61 und das Antriebssegment 62 sind um eine Drehachse 620 schwenkbar, die parallel zur Antriebsachse 75 des Schrittschaltwerks 7 verläuft.

Die Nullpunkt-Lage des Antriebshebels 61 wird durch eine Rückstellfeder 64 (vgl. Figur 2) definiert, die bei einer Auslenkung des Antriebshebels 61 aus der Nullpunkt-Lage eine Rückstellkraft auf den Antriebshebel 61 ausübt.

Das Antriebssegment 62 kämmt mit einem auf der Antriebsachse 75 des Schrittschaltwerks 7 angeordneten Antriebsritzel 77. Das Antriebssegment 62 und das Antriebsritzel 77 bilden ein Übersetzungsgetriebe aus, dessen Übersetzung durch die Durchmesser von Antriebssegment 62 und Antriebsritzel 77 festlegbar ist. Die Übersetzung wird bevorzugt derart ausgelegt, daß ein Nutzer bei einem Verschwenken des Antriebshebels 61 aus der Nullpunkt-Lage heraus ohne große Kraft eine präzise Längsverstellung vornehmen kann.

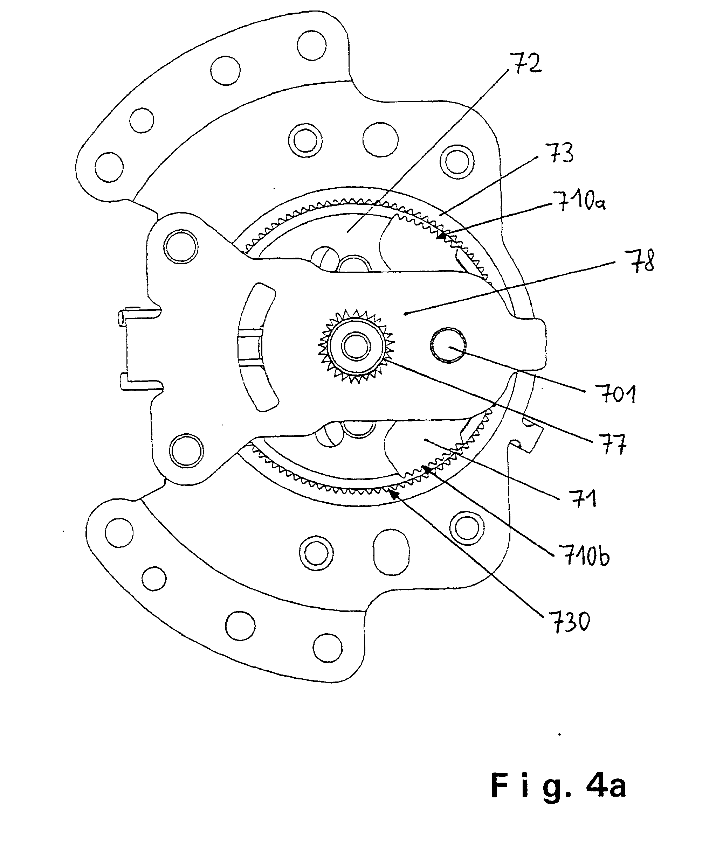

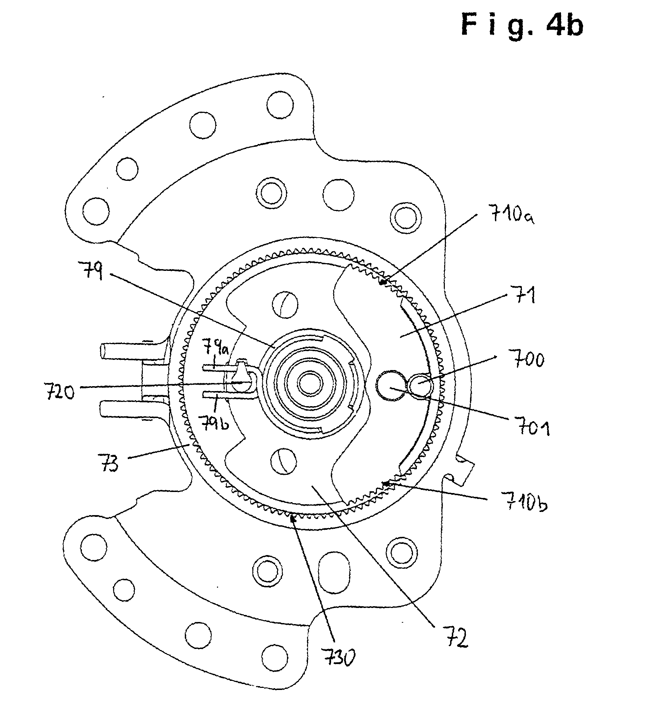

Das Schrittschaltwerk 7 weist Verriegelungsmittel und ein Antriebsrad 73 mit einer Innenverzahnung auf, die gemeinsam mit dem Antriebsritzel 77 auf einem Stufenbolzen 74 lagern, der entlang der Antriebsachse 75 (vgl. Fig. 2) angeordnet ist. Dies wird anhand der Fig. 4a, 4b noch im einzelnen ausgeführt werden. Der Stufenbolzen 74 weist antriebsseitig einen Stutzen auf, der formschlüssig in eine Verbindungswelle 76 eingreift, die mit der gegenüberliegende Schiene des Fahrzeugsitzes verbunden ist und an deren Ende ein weiteres Abtriebsritzel angeordnet ist, das in entsprechender Weise in eine Verzahnung der gegenüberliegenden Sitzunterschiene eingreift.

Das Schrittschaltwerk 7 und das Antriebssegment 62 sind gemäß Fig. 2 und 3 durch ein Abdeckblech 9 abgedeckt, das ebenfalls auf dem Stufenbolzen 74 lagert.

Abtriebsseitig schließt sich an das Antriebsrad 73 die Bremsvorrichtung 8 an. Zur Übertragung einer Kraft vom Antriebsrad 73 auf die Bremsvorrichtung 8 ist das Antriebsrad 73 mit einem Mitnehmerrad 81 verbunden, das zylindermantelförmig ausgebildete Mitnehmerklauen 82 aufweist. Die Mitnehmerklauen 82 sind formschlüssig zwischen im wesentlichen radialen Anschlagflächen von Bremsbacken 83 angeordnet.

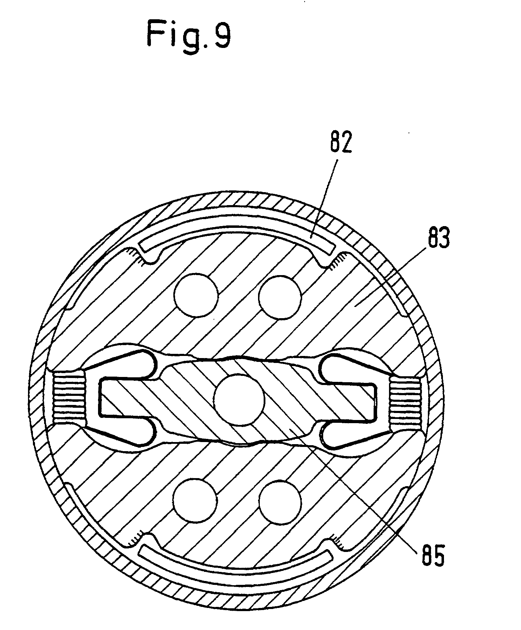

Eine antriebsseitige Kraft wird vom Antriebsrad 73 über das Mitnehmerrad 81 und weitere Formschlußelemente (nicht dargestellt) auf ein als Kupplungselement dienendes Flügelteil übertragen, das formschlüssig mit dem Abtriebsritzel 5 verbunden ist und eine Drehbewegung auf dieses überträgt. Die Mitnehmerklauen 82, die Bremsbacken 83 und das Flügelteil 85 sind in der Schnittansicht der Fig. 9 im einzelnen dargestellt. Die verwendete Bremsvorrichtung 8 ist an sich bekannt, etwa aus der DE 41 20 617 A1. Durch die Bremsvorrichtung 8 wird sichergestellt, daß bei Wirkung eines abtriebsseitigen Drehmoments auf das Abtriebsritzel 5 und den Flügel 85 die Bremsbacken 83 an die Innenwand des Bremsgehäuses geklemmt und eine Drehmomentübertragung dadurch gesperrt wird. Ein unkontrolliertes Verstellen des Fahrzeugsitzes ist dadurch ausgeschlossen.

Bei einer Verstellung des Antriebshebels 61 kämmt entsprechend der Richtung der Betätigung des Antriebshebels 61 das Antriebssegment 62 mit dem auf der Antriebsachse 75 angeordneten Antriebsritzel 77, das dadurch gedreht wird. Aufbau und Funktion des Schrittschaltwerks 7 werden im folgenden anhand der Figuren 4a und 4b erläutert.

Eine Wippe 71 weist zwei symmetrisch angeordnete, auf einem Kreisumfang liegende Verzahnungsbereiche 710a, 710b auf, wobei je nach Antriebsrichtung einer der Verzahnungsbereiche 710a, 710b mit der Innenverzahnung 730 des Antriebsrads 73 in Eingriff bringbar ist. Die Wippe 71 ist in einem ersten Lagerpunkt 700 mit einer Halteplatte 72 und in einem zweiten Lagerpunkt 701 mit einer drehfest mit der Antriebsritzel 77 verbundenen Hebelplatte 78 verbunden. Auf der Halteplatte 72 ist symmetrisch zur Antriebsachse eine Drehfeder 79 mit zwei Federenden 79a, 79b vorgesehen, die an einem zapfen 720 der Halteplatte 72 anliegen.

Bei einem Verschwenken des Antriebshebels 61 und damit einer über das Ritzel 77 bewirkten Verdrehung der Hebelplatte 78 wird der Lagerpunkt 701 zwischen der Hebelplatte 78 und der Wippe 71 mitgedreht. Da die Wippe 71 ebenfalls im Lagerpunkt 700 von Wippe 71 und Halteplatte 72 gelagert ist, greift bei einer Verdrehung der Hebelplatte 78 ein Drehmoment an der Halteplatte 72 an. Einer Drehung der Halteplatte 72 wirkt jedoch die Drehfeder 79 entgegen, die sich zum einen am Zapfen 720 der Halteplatte 72 und zum anderen an einem Zapfen (nicht dargestellt) des Abdeckblechs 9 abstützt.

Aufgrund dieser Federkraft wird bei einer Drehung der Halteplatte 72 aus der Nullstellung heraus ein rückstellendes Drehmoment auf die Halteplatte 72 ausgeübt, so daß diese bestrebt ist, in der Nullstellung zu verweilen. Die Drehfeder 79 erzeugt dabei das erforderliche Gegenmoment, das für ein sicheres Verkippen und Einrasten der Wippe 71 in die Verzahnung 730 des Antriebsrades 73 sorgt.

Bei einem Rückschwenken des Antriebshebels 61 bzw. (über das Verstellsegment 62 und das Antriebsritzel 77) der Hebelplatte 78 in die Nullpunkt-Lage wird das an der Wippe 71 anliegende Drehmoment aufgehoben, so daß der in Eingriff befindliche Verzahnungsbereich 710a, 710b der Wippe 71 außer Eingriff mit der Innenverzahnung 730 des Antriebsrades 73 gerät und bei einer Rückstellbewegung keine Kräfte auf das Antriebsrad 73 übertragen werden.

Damit ermöglicht der in den Figuren 1 bis 4b dargestellte Linearantrieb eine stufenlose, kontinuierliche Verstellung der Sitzoberschiene gegenüber der Sitzunterschiene. Eine Kraftübertragung auf das Abtriebsritzel 5 und damit eine Sitzlängsverstellung erfolgt entsprechend der gewählten Verstellrichtung aus der Nullpunkt-Lage heraus bei einer manuellen Betätigung des Antriebshebels 61 durch den Nutzer. Da sich das Abtriebsritzel 5 stets und insbesondere auch bei einem Verstellvorgang mit der Zahnstange 3 der Sitzunterschiene 1 in Eingriff befindet, besteht nicht die Gefahr, daß bei einer während des Verstellvorgangs plötzlich auftretenden Kraft, etwa im Crashfall, der Fahrzeugsitz durchrutscht.

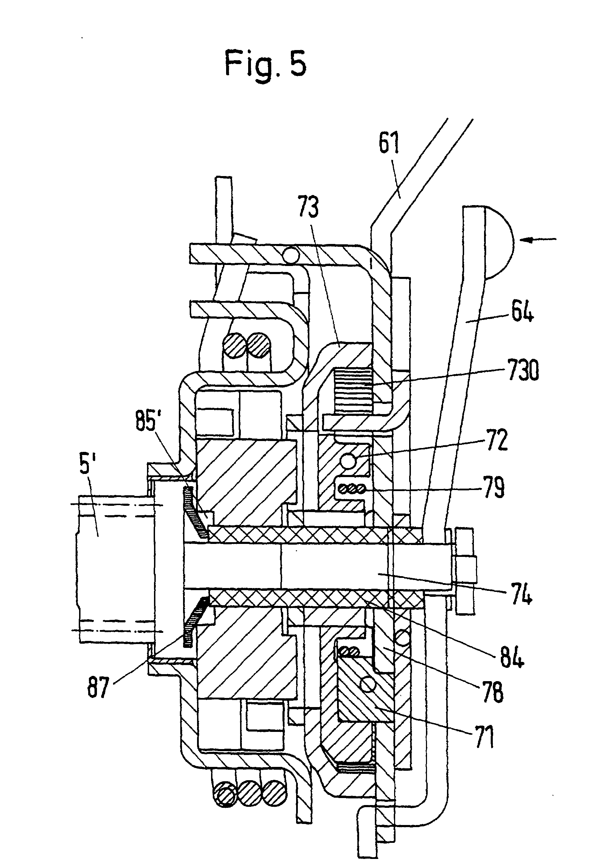

In Figur 5 ist eine alternative Ausgestaltung des Verstellantriebes dargestellt, die zusätzlich eine wahlweise Schnellverstellung ermöglicht. Für die Schnellverstellung wird - wie nachfolgend beschrieben - das Antriebsritzel 5' von dem Kupplungselement der Bremsvorrichtung 8 entkoppelt, so daß das Abtriebsritzel 5' frei in der Verzahnung 3 der Unterschiene 1 laufen kann und somit durch eine von außen wirkende Kraft, etwa durch Bewegen des Gesäßes des Nutzers, eine schnelle Verstellung des Sitzes möglich ist.

Der in Figur 5 dargestellte Verstellantrieb entspricht vom Aufbau an sich dem Verstellantrieb der Figuren 1 bis 4a. Dabei sind die Wippe 71, die Halteplatte 72 und die Drehfeder 79 besser als in den Fig. 1 und 2 zu erkennen. Ein gewisser Unterschied in der Ausführung liegt insofern vor, als die Hebelplatte 78 nicht über ein Antriebsritzel und ein Antriebssegment mit dem Antriebshebel 61 verbunden ist, sondern der (angedeutet dargestellte) Antriebshebel 61 direkt an der Hebelplatte 78 ansetzt. Eine derartige Ausbildung ist dann sinnvoll, wenn der Verstellantrieb 4 nicht zwischen den beiden Sitzschienen des Fahrzeugsitzes, sondern in gut zugänglicher Weise neben einer der Sitzschienen angeordnet ist. Die nachfolgend beschriebene Schnellverstellung des Sitzes kann jedoch ebenso gut bei Anordnung des Verstellantriebes im für den Nutzer nicht zugänglichen Bereich zwischen den parallelen Sitzschienen eingesetzt werden, wobei - wie in den Fig. 1 bis 3 beschrieben - der Antriebshebel dann über ein Antriebssegment 62 und ein Antriebsritzel 77 mit dem Schrittschaltwerk 7 gekoppelt ist.

Für eine durch einen Nutzer wahlweise vorzunehmende passive Schnellverstellung ist eine schaltbare Kupplungsvorrichtung vorgesehen, die ein Element des Schrittschaltwerks bzw. der Bremsvorrichtung schaltbar mit dem Abtriebselement 5' koppelt. Die Kupplungsvorrichtung schließt dabei im nichtbetätigten Zustand den Kraftfluß zwischen dem Antrieb und dem Abtriebselement 5' und unterbricht diesen Kraftfluß im betätigten Zustand.

In der Ausführung der Fig. 5 weist die Kupplungsvorrichtung eine Tellerfeder 87 auf, die in Zusammenwirken mit einer axial verschiebbaren Hülse 84 und einem Entkopplungs-Bedienelement 64 schaltbar mit dem Abtriebselement 5' kuppelbar ist. Die axial verschiebbare Hülse 84 stützt sich dazu an ihrem abtriebsseitigen Ende an der Tellerfeder 87 ab und liegt an ihrem antriebsseitiges Ende an dem Entkopplungs-Bedienhebel 64 an.

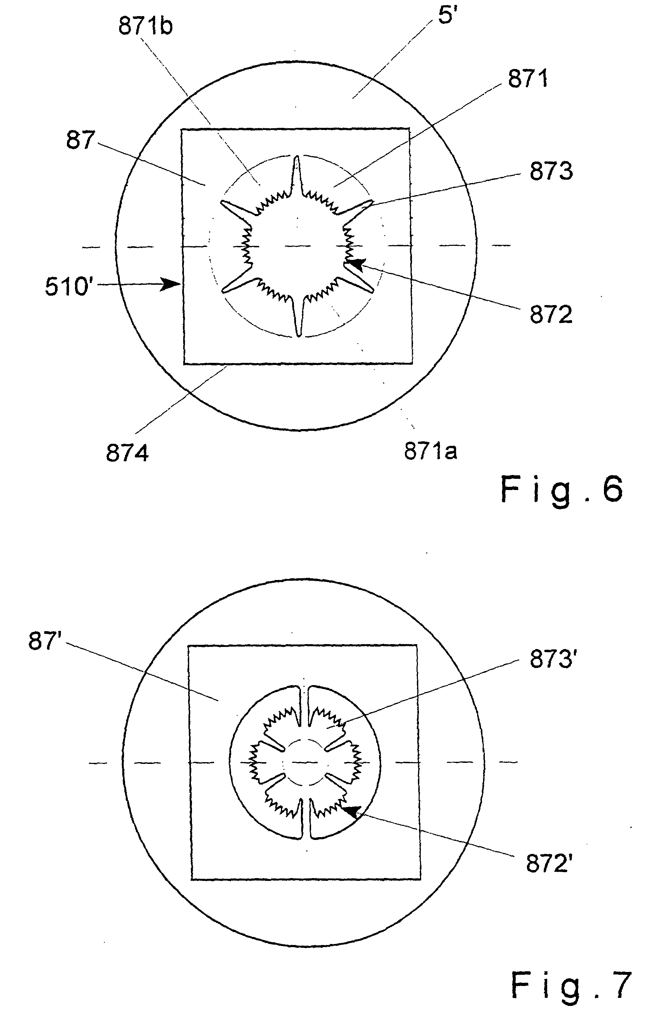

Gemäß Figur 6 weist die Tellerfeder 87 einen Federbereich auf, der durch radiale Einschnitte 873 in mehrere separat federnde Segmente 871 mit verzahnten freien Enden aufgeteilt ist. Die Verzahnung 872 der verzahnten freien Enden stellt antriebsseitige Formschlußelemente der Tellerfeder 87 zur Verfügung, die - wie nachfolgend noch erläutert - zur Übertragung einer Drehbewegung auf das Abtriebsritzel 5' mit einer paßfähigen Verzahnung eines Formschlußelements der Bremsvorrichtung 8 schaltbar in Eingriff bringbar sind.

Die Verzahnungen 872 benachbarter Segmente 871 des Federbereichs sind dabei um einen Bruchteil der Verzahnungsteilung zueinander versetzt, so daß es nach einer passiven Schnellverstellung nur eines Bruchteils der Verzahnungsteilung bedarf, bis ein erneuter Formschluß zwischen den federnden Segmenten 871 der Tellerfeder 87 und korrespondierenden Formschlußelementen der Bremsvorrichtung 8 erfolgt.

Dabei ist die Anzahl der Segmente 871 im Ausführungsbeispiel der Fig. 6 geradzahlig. Es sind sechs Segmente 871 vorgesehen, wobei die Verzahnungen 872 gegenüberliegender Segmente (etwa 871a, 871b) jeweils keinen Versatz aufweisen, so daß insgesamt drei versetzte Verzahnungen 871 zur Verfügung stehen. Durch den Verzicht auf einen Verzatz gegenüberliegender Verzahnungen 871 wird sichergestellt, daß immer die Verzahnungen zweier Segmente 871 für einen Formschluß zur Verfügung stehen.

Die Tellerfeder 87 bildet abtriebsseitig eine quadratische Kontur 874 aus und ist formschlüssig mit einer ebenfalls quadratischen Vertiefung 510' des Abtriebselements 5' permanent in Eingriff. Durch die von der Kreisform abweichende Kontur 874 der Tellerfeder 87 wird in einfacher Weise ein Formschluß mit dem Abtriebselement 5' ermöglicht.

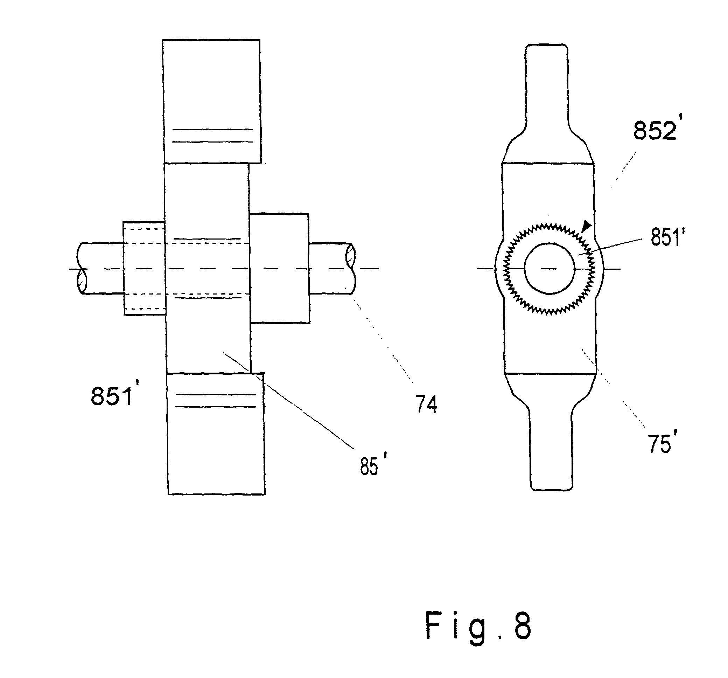

Zur Übertragung einer Antriebskraft auf die Tellerfeder 87 bzw. das mit der Tellerfeder formschlüssig verbundene Abtriebselement 5' greift in die Innenverzahnung 872 zweier gegenüberliegender Segmente 871 der Tellerfeder 87 ein Formschlußelement der Bremsvorrichtung 8 ein, auf das die antriebsseitigen Kräfte übertragen werden. Bei dem Formschlußelement handelt es sich im dargestellten Ausführungsbeispiel um ein Flügelelement 85' entsprechend dem Flügelelement 85 der Figur 9. Das Flügelelement 85' ist in der Schnittdarstellung der Figur 5' nur andeutungsweise zu erkennen, jedoch in Figur 8 gesondert dargestellt.

Die genaue Form des Flügelelements ist dabei je nach Ausführung der Bremsvorrichtung unterschiedlich. Wesentlich ist allein, daß eine auf den Antriebshebel 61 ausgeübte Antriebskraft mittels geeigneter Formschlußelemente über das Schrittschaltwerk 7 und die Bremsvorrichtung 8 auf das Flügelelement 85' und von diesem über eine Kupplungsvorrichtung auf das Abtriebsritzel 5' übertragen wird. Gemäß Figur 8 weist das Flügelelement 85' ein abtriebsseitig axial vorstehendes Formschlußelement 851' mit einer Außenverzahnung 852' auf, die mit der Verzahnung 872 der Tellerfeder 87 im nichtbetätigten Zustand der Kopplungsvorrichtung in Eingriff steht.

Ein Entkopplungsvorgang für eine Schnellverstellung wird dadurch ausgelöst, daß das Entkopplungs-Bedienelement 64 in axialer Richtung durch den Nutzer verschoben und dadurch die axial verschiebbare Hülse 84 entgegen der Federvorspannung der Tellerfeder 87 axial gegen die federnden Segmente 871 der Tellerfeder 87 geschoben wird, so daß die Segmente 871 bzw. die Verzahnungen 872 nach hinten gebogen werden und außer Eingriff mit der Verzahnung 852' des Flügelelements 85' gelangen. Für eine Schnellverstellung können Sitzober- und -unterschiene nun schnell gegeneinander verschoben werden, wobei das Abtriebsritzel 5' frei in der Zahnstange 3 läuft.

Sobald der Entkopplungs-Bedienhebel 64 losgelassen wird, wird die Hülse 84 aufgrund der Federkraft der Tellerfeder 87 axial zurückgeschoben, wobei die Formschlußelemente 872, 852' der Tellerfeder 87 und des Flügelelements 85' wieder formschlüssig in Eingriff geraten und eine Drehung des Abtriebsritzels 5' in der Zahnstange 3 aufgrund abtriebsseitiger Kräfte durch die Bremsvorrichtung 8 gehemmt wird. Es kann nun wieder eine manuelle aktive Längsverstellung erfolgen.

Figur 7 zeigt eine alternative Darstellung einer Tellerfeder 87', bei der die Federbereiche 872' der einzelnen Segmente 871' außen liegen. Entsprechend ist das Flügelelement 85' mit einer als Innenverzahnung ausgebildeten Gegenverzahnung versehen. Im übrigen entspricht die Kupplungsvorrichtung der Kupplungsvorrichtung der Fig. 5 und 6.

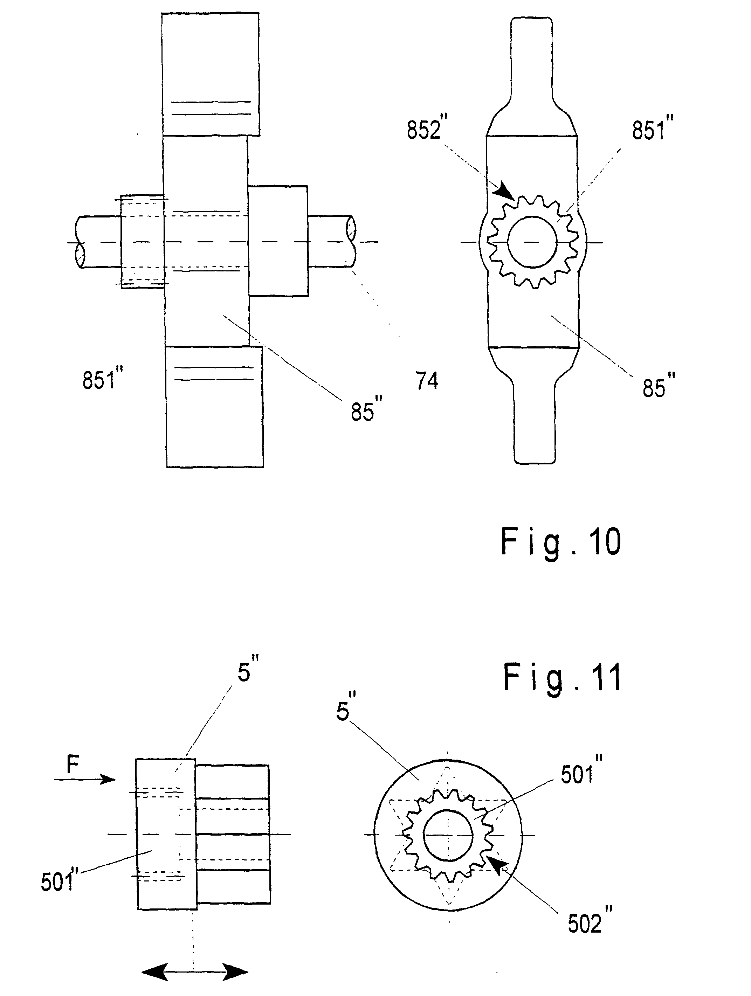

In den Figuren 10 und 11 ist eine alternative Variante einer schaltbaren Kupplungsvorrichtung für einen Antrieb gemäß Figur 5 dargestellt, bei der am Flügelelement 85" ein erster Kupplungsbereich 852" und am Antriebselement 5'' ein zweiter Kupplungsbereich 502'' ausgebildet sind, die im nichtbetätigten Zustand durch Federvorspannung ineinandergreifen und bei einer Betätigung der Kupplungsvorrichtung axial zueinander verschoben werden und dabei außer Eingriff gelangen.

So weist das Flügelelement 85'' einen mit einer Außenverzahnung 852'' versehenen Vorsprung 851'' auf, der axial in das Abtriebselement 5'' hereinragt. Im Abtriebselement 5'' ist eine entsprechende Aussparung 501'' mit einer Innenverzahnung 502'' ausgebildet. Der Flügel 85'' und das Abtriebselement 5'' lagern dabei auf dem Stufenbolzen 74 (vgl. auch Fig. 1 und Fig. 5). Eine Federvorspannung wird beispielsweise wiederum durch eine Tellerfeder erzeugt, deren Federbereich am Umfang der Hülse 84 befestigt ist (nicht dargestellt). Die Tellerfeder dient in diesem Falle jedoch nicht als Kupplungselement. Es sind auch andere Federelemente als Tellerfedern denkbar. Es kommt allein darauf an, daß eine Vorspannung anliegt, die dafür sorgt, daß die Kupplungsbereiche von Abtriebselement 5'' und Flügelelement 85'' im nichtbetätigten Zustand der Kupplungsvorrichtung ineinandergreifen und damit der Kraftschluß zwischen dem Antrieb und dem Abtriebselement 5" geschlossen ist.

Der Aufbau des Linearantriebs entspricht - abgesehen von der Ausgestaltung der Kupplungsvorrichtung - dem Aufbau der Figur 5.

Ein Entkopplungsvorgang für eine Schnellverstellung wird dadurch ausgelöst, daß die axial verschiebbare Hülse 84 bei Betätigung des Entkopplungs-Bedienelements 64 entgegen der Federkraft einer axial wirkenden Feder gegen das Abtriebselement 5'' geschoben wird, so daß sich dieses gegenüber dem Flügelelement 85'' axial verschiebt und der Verzahnungsbereich 502'' dabei außer Eingriff mit dem Verzahnungsbereich 852'' des Flügelelements 85'' gelangt. Das Abtriebselement 5'' kann nun frei in der Zahnstange 3 der Unterschiene 1 laufen, so daß Sitzober- und -unterschiene durch Bewegung des Gesäßes schnell gegeneinander verschoben werden können. Die axiale Verschiebbarkeit der Hülse 5'' bei Auftreten einer axialen Kraft F ist in Fig. 10 durch einen Doppelpfeil angedeutet.

Wenn der Entkopplungs-Bedienhebel 64 durch den Nutzer wieder losgelassen wird, wird die Hülse 84 aufgrund der Vorspannung der axial wirkenden Feder axial zurückgeschoben, wobei die Kupplungsbereiche bzw. Verzahnungen 502" und 852'' des Abtriebselements 5" und der Flügelelements 85'' wieder in Eingriff gelangen.

Alternativ ist bei der Ausführung der Figuren 10 und 11 vorgesehen, daß die Relativbewegung von Abtriebselement 5" und Flügelelement 85" nicht durch eine Hülse 84 gemäß Fig. 5, sondern durch andere geeignete Mittel bewirkt wird, die mit dem Entkopplungs-Bedienelement gekoppelt sind. Wesentlich ist allein, daß bei Betätigung des Entkopplungs-Bedienelements eine Relativbewegung der federbelasteten Teile der Kupplungsvorrichtung erfolgt, wodurch diese außer Eingriff geraten.

Beipielsweise ist alternativ ein Abtriebselement 5" vorgesehen, das bei Betätigung des Entkopplungs-Bedienelements über einen Bowdenzug axial gegen eine Federkraft verschoben wird. Zur Erzeugung einer Vorspannung ist dabei beispielsweise an einem umlaufendem Bund des Abtriebselements 5" ein Federelement befestigt, das eine Zugkraft auf das Abtriebselements 5" ausübt, so daß dieses und das Flügelelement 85'' im nichtbetätigten Zustand ineinandergreifen (nicht dargestellt).

Sofern der Linearantrieb 4 gemäß Figur 1 zwischen den Sitzschienen angeordnet ist, wäre der Entkopplungs- wie Bedienhebel 64 gemäß Figur 5 für den Nutzer nicht zugänglich. Für diesen Fall ist vorgesehen, den Bedienhebel 64 über ein Schaltelement (nicht dargestellt), das einen Entkopplungs-bzw. Kopplungsvorgang auslöst, betätigt wird. Bei dem Schaltelement handelt es sich etwa um einen Druckknopf, der bevorzugt in den gut zugänglichen Antriebshebel 61 integriert ist.

Es kann auf vielfältige Art eine Kopplung des abtriebsseitigen Getriebeelements mit einer Sitzschiene verwirklicht werden. In alternativen Ausgestaltungen des Linearantriebs ist der Abtrieb nicht als Kombination von Abtriebsritzel und Zahnstange, sondern insbesondere in einer der folgenden Varianten ausgeführt:
A. Das abtriebsseitige Getriebeelement ist als Schnecke ausgebildet, die in eine längs verlaufende Zahnstange einer Sitzschiene eingreift.
B. Das abtriebsseitige Getriebeelement ist als Spindelmutter ausgebildet, die in eine in Längsrichtung verlaufende und starr befestigte Spindel einer Sitzschiene eingreift. Die Spindel weist dabei eine Spindelverzahnung auf, die mit einer Innenverzahnung der Spindelmutter in Eingriff steht. Die Spindelmutter weist des weiteren eine äußere Schneckenverzahnung auf, die mit der Verzahnung einer Abtriebsschnekke des Linearantriebs kämmt. Eine Drehungbewegung der Abtriebsschnecke wird dabei auf die Spindelmutter übertragen, die zusammen mit der Antriebsschnecke in Längsrichtung der Spindel verfahren wird.
C. Das abtriebsseitige Getriebeelement ist eine Seilrolle, die mit einem in Längsrichtung der einen Sitzschiene gespannten Seil verbunden ist und bei einer Verstellbewegung zusammen mit der anderen Sitzschiene entlang des Seils verfahren wird.

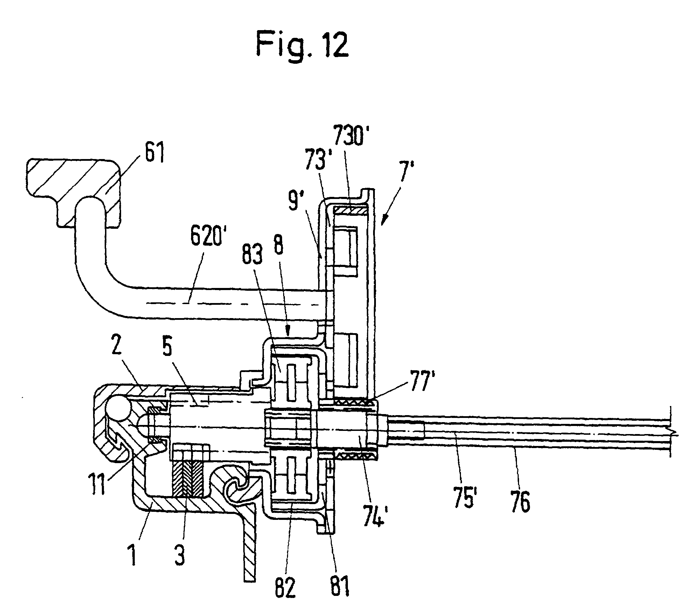

Figur 12 zeigt ein weiteres Ausführungsbeispiel eines beidseitig wirkenden Antriebs, der als Linearantrieb für eine Sitzlängsverstellung verwendet wird. Der grundsätzliche Aufbau des Antriebs entspricht dem Aufbau des Antriebs 4 der Figur 1. Anders als beim Antrieb der Figur 1 ist die Übersetzungsstufe jedoch nicht zwischen dem Antriebshebel und dem Schrittschaltwerk ausgebildet, sondern nunmehr zwischen dem Schrittschaltwerk 7' und der Sperrvorrichtung 8. Die Übersetzung ist damit in der Antriebseinheit selbst ausgebildet. Nachfolgend wird das Ausführungsbeispiel der Figur 12 nur insofern erläutert, als es von dem Ausführungsbeispiel der Figur 1 abweicht.

Ein Antriebshebel 61, der um eine Drehachse 620' schwenkbar ist, leitet eine Verstellkraft in ein Schrittschaltwerk 7' ein, das beispielsweise gemäß den Figuren 4a, 4b ausgebildet ist. Das Schrittschaltwerk 7' weist insbesondere ein Antriebsrad 73 auf. In der dargestellten Ausführungsform besitzt das Antriebsrad 73, zusätzlich zu der in den Figuren 4a, 4b dargestellten Innenverzahnung, eine Außenverzahnung 730'.

Die Bremsvorrichtung 8 und das Abtriebselement 5 des Verstellantriebs sind bei der Ausführungsform der Figur 12 auf einer Achse 75' angeordnet, die parallel zur Drehachse 620' des Antriebshebels 61 verläuft.

Eine Kopplung zwischen dem Schrittschaltwerk 7' und der Bremsvorrichtung 8 erfolgt über die Außenverzahnung 730' des Antriebsrades 73' mit der Verzahnung eines Ritzels 77' kleineren Durchmessers, das auf einem Stufenbolzen 74' lagert, der entlang der Achse 75' der Bremsvorrichtung angeordnet ist. Der Verzahnungsbereich zwischen der Verzahnung 730' des Antriebsrades 73' und der Verzahnung des Ritzels 77'stellt dabei die gewünschte Übersetzung zur Verfügung.

Das Antriebsritzel 77' ist mit dem Mitnehmerrad 81 der Bremsvorrichtung 8 verbunden, das eine antriebsseitige, über das Schrittschaltwerk auf das Ritzel 77' übertragene Kraft auf ein als Kupplungselement dienendes Flügelteil überträgt, wie in Bezug auf Figur 1 beschrieben. Eine Abdeckung 9' schließt sowohl das Schrittschaltwerk 7' als auch die Bremsvorrichtung 8 ab.

Die in Figur 12 dargestellte Ausführungsform zeichnet sich dadurch aus, daß die Übersetzungsstufe zwischen dem Schrittschaltwerk und der Bremsvorrichtung angeordnet ist, wobei die jeweiligen Achsen der Übersetzungsstufe zueinander versetzt angeordnet sind und durch die Größe der jeweiligen Ritzel (Antriebsrad 73', Ritzel 77') das Übersetzungsverhältnis festgelegt wird.

Es wird darauf hingewiesen, daß eine Kraftübertragung vom Schrittschaltwerk 7' auf ein mit der Bremsvorrichtung 8 gekoppeltes Formschlußelement (Ritzel 77') auch über andere Elemente als das Antriebsrad 73' des Schrittschaltwerkes 7' erfolgen kann, beispielsweise ein Ritzel, das mit dem Antriebsrad 73 verbunden ist. Wesentlich ist allein, daß die antriebsseitige Kraft im Schrittschaltwerk 7' auf ein Verzahnungsteil übertragen wird, das zur Ausbildung einer Übersetzung einen größeren Durchmesser als das mit der Bremsvorrichtung gekoppelte Formschlußelement (Ritzel 77') besitzt.

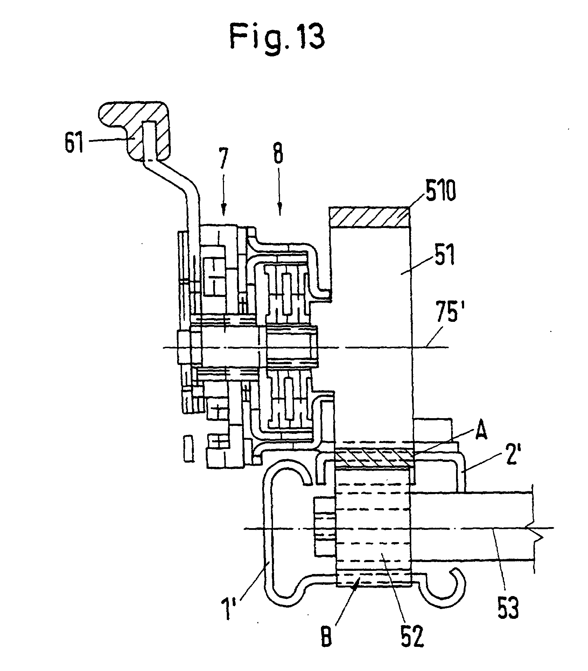

Figur 13 zeigt ein weiteres Ausführungsbeispiel eines beidseitig wirkenden Antriebs, der als Linearantrieb für eine Sitzlängsverstellung verwendet wird. Eine über einen Antriebshebel 61 ausgelöste Verstellbewegung wird über ein Schrittschaltwerk 7 und eine Bremsvorrichtung 8, wie in Bezug auf Figur 1 beschrieben, an ein abtriebsseitiges Getriebeelement übertragen. Bei dieser Ausführungsform ist zwischen der Bremsvorrichtung 8 und dem abtriebsseitigen Getriebeelement eine Übersetzungsstufe angeordnet.

Hierzu wird eine Drehbewegung von der Bremsvorrichtung zunächst auf ein Übersetzungsritzel 51 mit einer Verzahnung 510 übertragen, das hierzu mit Elementen der Bremsvorrichtung 8 formschlüssig verbunden ist. Das Übersetzungsritzel 51 kämmt in einem Übersetzungsbereich A mit der Verzahnung eines Abtriebsritzel 52, das wiederum in einem Verzahnungsbereich B in eine nicht näher dargestellte Längsverzahnung der Unterschiene 1 einer Sitzlängsverstellung eingreift. Der dargestellte Antrieb ist dabei mit der Sitzoberschiene 2' der Sitzlängsverstellung verbunden, wie bereits in Bezug auf Figur 1 erläutert und an sich bekannt.

Die Drehachse 53 des Abtriebsritzels 52 verläuft parallel zur Drehachse des Übersetzungsritzels 51, das auf der Drehachse 75' der Bremsvorrichtung 8 gelagert ist. Aufgrund der unterschiedlichen Durchmesser von Übersetzungsritzel 51 und Abtriebsritzel 52 wird eine über dem Antriebshebel 61 vorgenommene Drehbewegung mit einer Übersetzung auf das Abtriebsritzel 52 übertragen.

In alternativen Ausführungsbeispielen der Erfindung wird als Sperrvorrichtung nicht eine Bremsvorrichtung 8 verwendet, sondern statt dessen ein selbsthemmendes Getriebe genutzt, das aufgrund seiner Selbsthemmung die Einleitung abtriebsseitiger Drehmomente sperrt. Ein Beispiel für ein derartiges selbsthemmendes Getriebe ist ein Taumelgetriebe, wie es dem Fachmann an sich bekannt ist.

Die Erfindung ist in ihrer Anwendung nicht auf die vorgenannten Ausführungsbeispiele begrenzt. Wesentlich für die Erfindung ist allein, daß der Antrieb eine Übersetzungsstufe aufweist, die antriebsseitig oder abtriebsseitig mit dem Antrieb gekoppelt ist, bzw. die Möglichkeit besteht, das Schrittschaltwerk und die abtriebsseitigen Getriebeelemente durch eine schaltbare Kupplungsvorrichtung miteinander zu verbinden, die wahlweise eine passive Schnellverstellung ermöglicht.

## Patentansprüche

1. Stufenloser manueller Antrieb für eine Sitzlängsverstellung, mit einer ersten und einer zweiten geradlinigen oder gewölbten Schieneneinrichtung (1, 2), die gegeneinander in Längsrichtung verschiebbar sind, wobei die erste Schieneneinrichtung (1) mit einem abtriebsseitigen Getriebeelement (5) des Antriebs verbunden ist, das mit einem in Längsrichtung verlaufenden Teil der zweiten Schieneneinrichtung (2), insbesondere einem in Längsrichtung verlaufenden Verzahnungsteil (3), gekoppelt ist,
**dadurch gekennzeichnet,**
**daß** der Antrieb (4) aufweist
a) ein manuelles Schrittschaltwerk (7), das über einen Antriebshebel (61) antreibbar ist,
b) eine Sperrvorrichtung (8), die eine abtriebsseitige Drehmomentübertragung sperrt, eine antriebsseitige Drehmomentübertragung dagegen ermöglicht, und
c) mindestens eine Übersetzungsstufe (62, 77; 73', 77'; 51, 52), die antriebsseitig oder abtriebsseitig mit dem Schrittschaltwerk (7) gekoppelt ist.

2. Antrieb nach Anspruch 1, **dadurch gekennzeichnet, daß** die Übersetzungsstufe zwischen einem Antriebshebel (61) und dem Schrittschaltwerk (7) ausgebildet ist.

3. Antrieb nach Anspruch 2, **dadurch gekennzeichnet, daß** eine Kraftübertragung vom Antriebshebel (61) auf das Schrittschaltwerk (7) mittels eines Übersetzungselements (62) erfolgt, das zum einen mit dem Antriebshebel (61) und zum anderen mit einem auf der Antriebsachse (75) des Schrittschaltwerks (7) gelagerten Formschlußelement (77) gekoppelt ist.

4. Antrieb nach Anspruch 3, **dadurch gekennzeichnet, daß** das Übersetzungselement als Zahnsegment (62) ausgebildet ist, das auf der Drehachse (620) des Antriebshebels (61) gelagert ist und in ein auf der Antriebsachse (75) des Schrittschaltwerks (7) gelagertes Ritzel (77) eingreift.

5. Antrieb nach Anspruch 3 oder 4, **dadurch gekennzeichnet, daß** die Antriebsachse (75) des Schrittschaltwerks (7) und die Drehachse (620) des Antriebshebels (61) parallel zueinander verlaufen.

6. Antrieb nach Anspruch 1, **dadurch gekennzeichnet, daß** die Übersetzungsstufe zwischen dem Schrittschaltwerk (7') und der Sperrvorrichtung (8) ausgebildet ist.

7. Antrieb nach Anspruch 6, **dadurch gekennzeichnet, daß** eine Kraftübertragung vom Schrittschaltwerk (7') auf die Sperrvorrichtung (8) über ein Übersetzungselement (73') erfolgt, das in ein auf der Achse (75') der Sperrvorrichtung (8) gelagertes und mit dieser gekoppeltes Formschlußelement (77') eingreift.

8. Antrieb nach Anspruch 7, **dadurch gekennzeichnet, daß** das Übersetzungselement durch die Außenverzahnung (730') eines Antriebsrads (73') des Schrittschaltwerks (7') gebildet wird.

9. Antrieb nach Anspruch 1, **dadurch gekennzeichnet, daß** die Übersetzungsstufe zwischen der Sperrvorrichtung (8) und dem abtriebsseitigen Getriebeelement (52) ausgebildet ist.

10. Antrieb nach Anspruch 9, **dadurch gekennzeichnet, daß** eine Kraftübertragung von der Sperrvorrichtung (8) auf das abtriebsseitige Getriebeelement (52) mittels eines Übersetzungselements (51) erfolgt, das zum einen mit der Sperrvorrichtung (8) und zum anderen mit dem abtriebsseitigen Getriebeelement (52) gekoppelt ist.

11. Antrieb nach Anspruch 10, **dadurch gekennzeichnet, daß** das Übersetzungselement als Ritzel (51) ausgebildet ist, das auf der Antriebsachse (75') der Sperrvorrichtung (8) gelagert ist und mit dem abtriebsseitigen Getriebeelement (52) kämmt, wobei das abtriebsseitigen Getriebeelement (5) auf einer Achse (53) parallel zur Antriebsachse (75') der Sperrvorrichtung (8) gelagert ist.

12. Antrieb nach mindestens einem der vorangehenden Ansprüche, **dadurch gekennzeichnet, daß** das Schrittschaltwerk (7) ein beidseitig wirkender Antrieb zur Erzeugung einer Drehbewegung ist, die wahlweise ausgehend von einer Nullpunkt-Lage des Antriebshebels (61) in die eine oder andere Antriebsrichtung erfolgt, wobei ein abtriebsseitiges Getriebeelement (5, 5', 5") nur dann gedreht wird, wenn sich der Antriebshebel (61) von der Nullpunkt-Lage weg bewegt, während bei einer Bewegung des Antriebshebels (61) in Richtung der Nullpunkt- Lage keine Drehung des abtriebsseitigen Getriebeelements (5, 5', 5") erfolgt.

13. Antrieb nach mindestens einem der vorangehenden Ansprüche, **dadurch gekennzeichnet, daß** antriebsseitige Kräfte über mindestens ein Element (85, 85', 85") der Sperrvorrichtung (8) auf eine Kupplungsvorrichtung (851', 87; 851', 87'; 851'', 501'') übertragen werden, die zur Übertragung von Drehmomenten mit dem abtriebsseitigen Getriebeelement (5, 5', 5'') gekoppelt ist.

14. Antrieb nach Anspruch 13, **dadurch gekennzeichnet, daß** die Kupplungsvorrichtung (851', 87; 851', 87'; 851'', 501'') für eine manuelle passive Sitzverstellung schaltbar ausgebildet ist, wobei die Kupplungsvorrichtung (851', 87; 851', 87'; 851", 501") in einem ersten, nichtbetätigten Schaltzustand den Kraftfluß zwischen dem Antrieb (4) und dem abtriebsseitigen Getriebeelement (5', 5") schließt und in einem zweiten, betätigten Schaltzustand den Kraftfluß zwischen Antrieb (4) und abtriebsseitigem Getriebeelement (5', 5'') unterbricht.

15. Antrieb nach Anspruch 13 oder 14, **dadurch gekennzeichnet, daß** die Kupplungsvorrichtung ein einstückiges Federelement (87, 87') mit abtriebsseitigen Formschlußelementen (874) und antriebsseitigen Formschlußelementen (872, 872') aufweist.

16. Antrieb nach Anspruch 13 oder 14, **dadurch gekennzeichnet, daß** zum Schalten der Kupplungsvorrichtung (851', 87; 851', 87'; 851'', 501'') eine axial verschiebbare Hülse (84) und ein mit dieser in Verbindung stehendes Entkopplungs-Bedienelement (64) vorgesehen sind, wobei die Hülse (84) bei Betätigung des Entkopplungs-Bedienelements (64) entgegen einer Federvorspannung axial verschoben wird und dabei die Kopplung zwischen dem Antrieb (4) und dem abtriebsseitigen Getriebeelement (5) unterbricht.

17. Antrieb nach Anspruch 16, **dadurch gekennzeichnet, daß** das Entkopplungs-Bedienelement ein verkippbarer, antriebsseitig angeordneter Hebel (64) ist, bei dessen Verkippung gegen die Vorspannung eine axiale Stellbewegung auf die Hülse (84) ausgeübt und dadurch ein Entkopplungsvorgang ausgelöst wird.

18. Antrieb nach Anspruch 15 oder 16, **dadurch gekennzeichnet, daß** dem Entkopplungs-Bedienelement (64) ein Schaltelement, etwa ein in den Antriebshebel (61) integrierter Druckknopf, zugeordnet ist, bei dessen Betätigung der Kopplungs- bzw. Entkopplungsvorgang ausgelöst wird.

19. Antrieb nach mindestens einem der vorangehenden Ansprüche, **dadurch gekennzeichnet, daß** das abtriebsseitige Getriebeelement als Ritzel (5, 5', 5'') oder als Schnekke ausgebildet ist, das bzw. die in eine Zahnstange (3) der zweiten Schieneneinrichtung (1) eingreift.

20. Antrieb nach mindestens einem der vorangehenden Ansprüche, **dadurch gekennzeichnet, daß** das abtriebsseitige Getriebeelement eine Spindelmutter ist bzw. mit einer Spindelmutter verbunden ist, die in eine in Längsrichtung verlaufende Spindel der zweiten Schieneneinrichtung eingreift.

21. Antrieb nach mindestens einem der vorangehenden Ansprüche, **dadurch gekennzeichnet, daß** das abtriebsseitige Getriebeelement als Seilrolle ausgebildet ist, die mit einem in Längsrichtung der zweiten Schieneneinrichtung gespannten Seil verbunden ist.

22. Antrieb nach mindestens einem der vorangehenden Ansprüche, **dadurch gekennzeichnet, daß** die erste und zweite Schieneneinrichtung die Oberschiene (2) und Unterschiene (1) eines Schienenpaars einer Sitzlängsverstellung darstellen.

23. Stufenloser manueller Antrieb für Sitzverstellungen in Kraftfahrzeugen unter Verwendung eines Schrittschaltwerks (7) zur Sitzverstellung, das eine Antriebskraft auf mindestens ein abtriebsseitiges Getriebeelement (5', 5") überträgt, wobei im Kraftfluß zwischen dem Schrittschaltwerk (7) und dem abtriebsseitigen Getriebeelement (5', 5") eine Sperrvorrichtung (8) angeordnet ist, die eine abtriebsseitige Drehmomentübertragung sperrt, eine antriebsseitige Drehmomentübertragung dagegen ermöglicht,
**gekennzeichnet durch**
eine Kupplungsvorrichtung (851', 87; 851', 87'; 851'', 501''), die im nichtbetätigten Zustand den Kraftfluß zwischen dem Schrittschaltwerk (7) und den abtriebsseitigen Getriebeelementen (5', 5'') mittels Federvorspannung schließt und im betätigten Zustand die Verbindung zwischen den abtriebsseitigen Getriebeelementen (5', 5'') und der Sperrvorrichtung (8) unterbricht, so daß eine Sitzverstellung möglich ist.

24. Antrieb nach Anspruch 23, **dadurch gekennzeichnet, daß** die Kupplungsvorrichtung Formschlußelemente (852', 872, 872', 852'', 502'') zur Ausführung des Kupplungsvorgangs aufweist.

25. Antrieb nach Anspruch 23, **dadurch gekennzeichnet, daß** die Kupplungsvorrichtung Reibschlußelemente zur Ausführung des Kupplungsvorgangs aufweist.

26. Antrieb nach mindestens einem der Ansprüche 23 bis 25, **dadurch gekennzeichnet, daß** die Kupplungsvorrichtung einen ersten Kupplungsbereich (872, 872', 501''), der Bestandteil eines abtriebsseitigen Getriebeelements (87, 5'') ist, und einen zweiten Kupplungsbereich (852', 852''), der Bestandteil eines Elements (85', 85") des Schrittschaltwerks (7) oder einer mit dem Schrittschaltwerk gekoppelten Sperrvorrichtung (8) ist, aufweist.

27. Antrieb nach mindestens einem der Ansprüche 23 bis 26, **dadurch gekennzeichnet, daß** die Kupplungsvorrichtung ein einstückiges Federelement (87, 87') mit abtriebsseitigen Formschlußelementen (874) und mit antriebsseitigen Formschlußelementen (872, 872') aufweist.

28. Antrieb nach mindestens einem der Ansprüche 23 bis 27, **dadurch gekennzeichnet, daß** die Kupplungsvorrichtung bezüglich der Antriebsachse (75) als axialwirkendes Federelement (87, 87') ausgebildet ist.

29. Antrieb nach mindestens einem der Ansprüche 23 bis 27, **dadurch gekennzeichnet, daß** die Kupplungsvorrichtung bezüglich der Antriebsachse (75) als radialwirkendes Federelement ausgebildet ist.

30. Antrieb nach mindestens einem der Ansprüche 27 bis 29, **dadurch gekennzeichnet, daß** die einen Formschlußelemente (874) der Kupplungsvorrichtung (87, 87') permanent mit zugeordneten Formschlußelementen (510') eines abtriebsseitigen Getriebeelements (5') oder eines zum Schrittschaltwerk gehörenden Teils in Verbindung stehen und daß die anderen Formschlußelemente (872, 872') der Kupplungsvorrichtung (87, 87') kuppelbar mit dem entsprechenden anderen Teil (851') in Verbindung bringbar sind.

31. Antrieb nach mindestens einem der Ansprüche 27, 28 oder 30, **dadurch gekennzeichnet, daß** das Federelement nach Art einer Tellerfeder (87, 87') ausgebildet ist, dessen Federbereich in mehrere separat federnde Segmente (871, 871') mit verzahnten freien Enden (872, 872') aufgeteilt ist, und daß eine von der Kreisform abweichende Kontur (874) des Basisfläche des Federelements einem Formschlußelement (510') des abtriebsseitigen Getriebelements (5') oder des antriebsseitigen Elements zugeordnet ist.

32. Antrieb nach Anspruch 31, **dadurch gekennzeichnet, daß** die Verzahnungen (872, 872') benachbarter Segmente (871, 871') um einen Bruchteil der Verzahnungsteilung versetzt sind.

33. Antrieb nach Anspruch 31 oder 32, **dadurch gekennzeichnet, daß** die Anzahl der Segmente (871, 871') geradzahlig und größer oder gleich der Zahl "vier" ist und daß die Verzahnungen (872, 872') gegenüberliegender Segmente (871a, 871b) keinen Versatz aufweisen.

34. Antrieb nach mindestens einem der Ansprüche 26 bis 33, **dadurch gekennzeichnet, daß** der erste Kupplungsbereich (501'') und der zweite Kupplungsbereich (851'') im nichtbetätigten Zustand durch Federvorspannung ineinandergreifen und durch eine Betätigung der Kopplungsvorrichtung axial verschiebbar und dabei außer Eingriff bringbar sind.

35. Antrieb nach mindestens einem der Ansprüche 23 bis 34, **dadurch gekennzeichnet, daß** zur Betätigung der Kupplungsvorrichtung ein Entkopplungs-Bedienelement (64) vorgesehen ist, das mit einer axial verschiebbaren Hülse (84) in Verbindung steht, die bei Betätigung des Entkopplungs-Bedienelements (64) entgegen der Federvorspannung axial verschoben wird und dabei die Verbindung zwischen dem Antrieb (4) und den abtriebsseitigen Getriebeelementen (5, 5') unterbricht.

36. Antrieb nach Anspruch 35 und mindestens einem der Ansprüche 27 bis 34, **dadurch gekennzeichnet, daß** die axial verschiebbare Hülse (84) bei Betätigung des Entkopplungs-Bedienelements (64) entgegen der Federkraft des Federelements (87, 87') axial gegen das Federelement (87, 87') geschoben und dessen antriebsseitigen Formschlußelemente (872, 872') dabei außer Eingriff mit den Formschlußelementen (852') des zugehörigen Kupplungselements (851') gelangen.

37. Antrieb nach Anspruch 35 und 36, **dadurch gekennzeichnet, daß** die axial verschiebbare Hülse (84) bei Betätigung des Entkopplungs-Bedienelements (64) entgegen der Federkraft einer axial wirkenden Feder gegen ein abtriebsseitiges Getriebeelement (5'') geschoben und dieses dabei außer Eingriff mit einem zugehörigen antriebsseitigen Getriebeelement (851'') gebracht wird.

38. Antrieb nach mindestens einem der vorangehenden Ansprüche, **dadurch gekennzeichnet, daß** die Sperrvorrichtung als Bremsvorrichtung (8) ausgebildet ist.

39. Antrieb nach mindestens einem der Ansprüche 1 bis 38, **dadurch gekennzeichnet, daß** die Sperrvorrichtung durch ein selbsthemmendes Getriebe ausgebildet ist.

40. Antrieb nach Anspruch 39, **dadurch gekennzeichnet, daß** das selbsthemmende Getriebe ein Taumelgetriebe ist.

41. Verwendung des Antriebs nach Anspruch 23 für einen stufenlosen manuellen Antrieb mit einer ersten und einer zweiten geradlinigen oder gewölbten Schieneneinrichtung (1, 2) einer Sitzlängsverstellung, die gegeneinander in Längsrichtung verschiebbar sind, wobei die erste Schieneneinrichtung (1) mit einem abtriebsseitigen Getriebeelement (5', 5'') des Antriebs verbunden ist, und dieses Getriebeelement (5', 5") mit einem in Längsrichtung verlaufenden Teil der zweiten Schieneneinrichtung (2), insbesondere einem in Längsrichtung verlaufenden Verzahnungsteil (3), gekoppelt ist.

## Claims

1. Continuously variable manual drive for seat adjusters, with a first and a second rectilinear or curved rail device (1, 2) which are displaceable relative to each other in the longitudinal direction wherein the first rail device (1) is connected to an output-side gear element (5) of the drive which is coupled to a longitudinally aligned part of the second rail device (2), more particularly a longitudinally aligned toothed part (3),
**characterised in that**
the drive (4) has
a) a manual step switch mechanism (7) which can be driven through a drive lever (61),
b) a locking device (8) which blocks torque transfer on the output side but enables torque transfer on the drive side, and
c) at least one transmission step (62, 77; 73', 77'; 51, 52) which is coupled on the drive side or output side to the step switch mechanism (7).

2. Drive according to claim 1 **characterised in that** the transmission step is formed between a drive lever (61) and the step switch mechanism (7).

3. Drive according to claim 2 **characterised in that** force transfer from the drive lever (61) to the step switch mechanism (7) is undertaken by means of a transmission element (62) which is coupled on the one hand to the drive lever (61) and on the other to a positive locking element (77) mounted on the drive axis (75) of the step switch mechanism.

4. Drive according to claim 3 **characterised in that** the transmission element is formed as a toothed segment (62) which is mounted on the rotary axis (620) of the drive lever (61) and engages in a pinion (77) mounted on the drive axis (75) of the step switch mechanism (7).

5. Drive according to claim 3 or 4 **characterised in that** the drive axis (75) of the step switch mechanism (7) and the rotary axis (620) of the drive lever (61) run parallel to each other.

6. Drive according to claim 1 **characterised in that** the transmission step is formed between the step switch mechanism (7') and the locking device (8).

7. Drive according to claim 6 **characterised in that** force transfer from the step switch mechanism (7') to the locking device (8) is through a transmission element (73') which engages in a positive locking element (77') which is mounted on the axis (75') of the locking device (8) and is coupled to same.

8. Drive according to claim 7 **characterised in that** the transmission element is formed by the external teeth (730') of a drive wheel (73') of the step switch mechanism (7').

9. Drive according to claim 1 **characterised in that** the transmission step is formed between the locking device (8) and the gear element (52) on the output side.

10. Drive according to claim 9 **characterised in that** force transfer from the locking device (8) to the output-side gear element (52) is by means of a transmission element (51) which is coupled on one side to the locking device (8) and on the other to the gear element (52) on the output side.

11. Drive according to claim 10 **characterised in that** the transmission element is formed as a pinion (51) which is mounted on the drive axis (75') of the locking device (8) and meshes with the output-side gear element (52), with the output-side gear element (5) being mounted on an axis (53) parallel to the drive axis (75') of the locking device (8).

12. Drive according to at least one of the preceding claims **characterised in that** the step switch mechanism (7) is a drive acting on both sides to produce a rotary movement which takes place selectively in one drive direction or the other starting from the neutral position of the drive lever (61) wherein an output-side gear element (5, 5', 5'') is only then turned when the drive lever (61) is moved away from the neutral position whereas when the drive lever (61) is moved in the direction of the neutral position there is no rotation of the output-side gear element (5, 5', 5").

13. Drive according to at least one of the preceding claims **characterised in that** drive-side forces are transferred through at least one element (85, 85', 85") of the locking device (8) to a coupling device (851, 87; 851', 97', 851", 501'') which is coupled to the output-side gear element (5, 5', 5") for the purpose of transferring torque.

14. Drive according to claim 13 **characterised in that** the coupling device (851', 87; 851', 87'; 851'', 501'') is designed so that it can switch for a manual passive seat adjustment, wherein the coupling device (851', 87; 851', 87'; 851", 501'') in a first non-activated switching state maintains the power flow between the drive (4) and the output-side gear element (5', 5'') and in a second activated switching state breaks off the power flow between the drive (4) and the gear element (5', 5") on the output side.

15. Drive according to claim 13 or 14 **characterised in that** the coupling device has a one-piece spring element (87, 87') with positive locking elements (874) on the output side and positive locking elements (872, 872') on the drive side.

16. Drive according to claim 13 or 14 **characterised in that** for switching the coupling device (851', 87; 851', 87'; 851", 501'') there is an axially displaceable sleeve (84) and an uncoupling operating element (64) connected therewith so that when the uncoupling operating element (64) is actuated the sleeve (84) is moved axially against spring pretension and thereby breaks off the coupling between the drive (4) and the gear element (5) on the output side.

17. Drive according to claim 16 **characterised in that** the uncoupling operating element is a tip-up lever (64) mounted on the drive side so that when tilted against pretension an axial setting movement is exerted on the sleeve (84) which thereby triggers the uncoupling process.

18. Drive according to claim 15 or 16 **characterised in that** the uncoupling operating element (64) is associated with a switch element, such as a press button integrated in the drive lever (61), which when actuated triggers the coupling or uncoupling process.

19. Drive according to at least one of the preceding claims **characterised in that** the output-side gear element is formed as a pinion (5, 5'5, 5'') or as a worm which engages in a toothed rod (3) of the second rail device (1).

20. Drive according to at least one of the preceding claims **characterised in that** the output-side gear element is a spindle nut or is connected to a spindle nut which engages in a longitudinally aligned spindle of the second rail device.

21. Drive according to at least one of the preceding claims **characterised in that** the output-side gear element is formed as a cable pulley which is connected to a cable tensioned in the longitudinal direction of the second rail device.

22. Drive according to at least one of the preceding claims **characterised in that** the first and second rail device form the top rail (2) and the bottom rail (1) of a pair of rails of a longitudinal seat adjuster.

23. Continuously variable manual drive for seat adjusters in motor vehicles using a step switch mechanism (7) for the seat adjustment which transfers a drive force to at least one output-side gear element (5', 5") wherein in the power flow between the step switch mechanism (7) and the output-side gear element (5', 5'') there is a locking device (8) which blocks torque transfer on the output side but enables torque transfer on the drive side, **characterised by**
a coupling device (851', 87; 851', 87'; 851'', 501'') which in the non-actuated state maintains the power flow between the step switch mechanism (7) and the output-side gear elements (5', 5'') by means of spring pretension and in the actuated state breaks off the connection between the output-side gear elements (5', 5") and the locking device (8) so that a seat adjustment is possible.

24. Drive according to claim 23 **characterised in that** the coupling device has positive locking elements (852', 872, 872', 852", 502") for implementing the coupling process.

25. Drive according to claim 23 **characterised in that** the coupling device has friction locking elements for implementing the coupling process.

26. Drive according to at least one of claims 23 to 25 **characterised in that** the coupling device has a first coupling region (872, 872', 501'') which is a constituent part of a gear element (87, 5") on the output side, and a second coupling region (852', 852") which is a constituent part of an element (85', 85") of the step switch mechanism (7) or a locking device (8) coupled to the step switch mechanism.

27. Drive according to at least one of claims 23 to 26 **characterised in that** the coupling device has an integral spring element (87, 87') with positive locking elements (874) on the output side and with positive locking elements (872, 872') on the drive side.

28. Drive according to at least one of claims 23 to 27 **characterised in that** the coupling device is formed as a spring element (87, 87') acting axially in respect of the drive axis (75).

29. Drive according to at least one of claims 23 to 27 **characterised in that** the coupling device is formed as a spring element acting radially in respect of the drive axis (75).

30. Drive according to at least one of claims 27 to 29 **characterised in that** the one positive locking element (874) of the coupling device (87, 87') is in permanent connection with associated positive locking elements (510') of a gear element (5') on the output side or a part belonging to the step switch mechanism, and that the other positive locking elements (872, 872') of the coupling device (87, 87') can be brought into coupling connection with the corresponding other part (851').

31. Drive according to at least one of claims 27, 28 or 30 **characterised in that** the spring element is formed as a type of plate spring (87, 87') whose spring area is divided into several individually resilient segments (871, 871') with cogged free ends (872, 872'), and that a contour (874) of the base surface of the spring element which is other than circular is assigned to a positive locking element (510') of the gear element (5') on the output side or of the element on the drive side.

32. Drive according to claim 31 **characterised in that** the teeth (872, 872') of adjoining segments (871, 871') are off-set by a fraction of the tooth division.

33. Drive according to claim 31 or 32 **characterised in that** the number of segments (871, 871') is even and greater than or equal to the number "four" and that the teeth (872, 872') of opposite segments (871a, 871b) have no stagger.

34. Drive according to at least one of claims 26 to 33 **characterised in that** the first coupling region (501'') and the second coupling region (851'') in the non-activated state engage in each other through spring pretension and when the coupling device is actuated can be axially displaced and thereby disengaged from each other.

35. Drive according to at least one of claims 23 to 34 **characterised in that** for actuating the coupling device an uncoupling operating element (64) is provided which is connected to an axially displaceable sleeve (84) which when the uncoupling operating element (64) is actuated is moved axially against the spring pretension to thereby break off the connection between the drive (4) and the gear elements (5, 5') on the output side.

36. Drive according to claim 35 and at least one of the claims 27 to 34 **characterised in that** the axially displaceable sleeve (84) during actuation of the uncoupling operating element (654) is moved against the spring force of the spring element (87, 87') axially towards the spring element (87, 87') and its positive locking elements (872, 872') on the drive side thereby move out of engagement with the positive locking elements (852') of the associated coupling element (851').

37. Drive according to claim 35 and 36 **characterised in that** the axially displaceable sleeve (84) during actuation of the uncoupling operating element (64) is moved against the spring force of an axially acting spring towards an output-side gear element (5") so that this is then brought out of engagement with the associated gear element (851'') on the drive side.

38. Drive according to at least one of the preceding claims **characterised in that** the locking device is formed as a brake device (8).

39. Drive according to at least one of claims 1 to 38 **characterised in that** the locking device is formed by a self-locking gear.

40. Drive according to claim 39 **characterised in that** the self-locking gear is a tumbler gear.

41. Use of the drive according to claim 23 for a continuously variable manual drive with a first and a second rectilinear or curved rail device (1, 2) of a longitudinal seat adjuster which are displaceable relative to each other in the longitudinal direction, wherein the first rail device (1) is connected to an output-side gear element (5', 5'') of the drive, and this gear element (5', 5'') is coupled to a longitudinally aligned part of the second rail device (2), more particularly a longitudinally aligned toothed part (3).

## Revendications

1. Entraînement manuel continu pour un réglage longitudinal de siège, comportant un premier et un deuxième dispositif à rail rectiligne ou bombé (1, 2), mobiles en direction longitudinale l'un par rapport à l'autre, le premier dispositif à rail (1) étant relié à un élément de transmission (5) du côté mené de l'entraînement, qui est accouplé à une partie s'étendant en direction longitudinale du deuxième dispositif à rail (2), en particulier à une partie dentée (3) s'étendant en direction longitudinale,
**caractérisé en ce que** l'entraînement (4) comprend :
a) un mécanisme pas à pas manuel (7) susceptible d'être entraîné au moyen d'un levier d'entraînement (61),
b) un dispositif de blocage (8) qui bloque une transmission du couple de rotation côté mené mais qui permet une transmission du couple de rotation côté menant, et
c) au moins un étage de démultiplication (62, 77 ; 73', 77' ; 51, 52) qui est accouplé côté menant ou côté mené au mécanisme pas à pas (7).

2. Entraînement selon la revendication 1, **caractérisé en ce que** l'étage de démultiplication est réalisé entre un levier d'entraînement (61) et le mécanisme pas à pas (7).

3. Entraînement selon la revendication 2, **caractérisé en ce qu'**une transmission de la force depuis le levier d'entraînement (61) au mécanisme pas à pas (7) s'effectue au moyen d'un élément démultiplicateur (62) qui est accouplé d'une part au levier d'entraînement (61) et d'autre part à l'élément à coopération de formes (77) monté sur l'axe d'entraînement (75) du mécanisme pas à pas (7).

4. Entraînement selon la revendication 3, **caractérisé en ce que** l'élément démultiplicateur est réalisé sous la forme d'un secteur denté (62) qui est monté sur l'axe de rotation (620) du levier d'entraînement (61) et qui s'engage dans un pignon (77) monté sur l'axe d'entraînement (75) du mécanisme pas à pas (7).

5. Entraînement selon l'une ou l'autre des revendications 3 et 4, **caractérisé en ce que** l'axe d'entraînement (75) du mécanisme pas à pas (7) et l'axe de rotation (620) du levier d'entraînement (61) s'étendent parallèlement l'un à l'autre.

6. Entraînement selon la revendication 1, **caractérisé en ce que** l'étage de démultiplication est réalisé entre le mécanisme pas à pas (7') et le dispositif de blocage (8).

7. Entraînement selon la revendication 6, **caractérisé en ce qu'**une transmission de la force depuis le mécanisme pas à pas (7') au dispositif de blocage (8) s'effectue via un élément démultiplicateur (73') qui s'engage dans un élément à coopération de formes (77') monté sur l'axe (75') du dispositif de blocage (8) et accouplé à celui-ci.

8. Entraînement selon la revendication 7, **caractérisé en ce que** l'élément démultiplicateur est formé par la denture extérieure (730') d'une roue d'entraînement (73') du mécanisme pas à pas (7').

9. Entraînement selon la revendication 1, **caractérisé en ce que** l'étage de démultiplication est réalisé entre le dispositif de blocage (8) et l'élément de transmission (52) du côté mené.

10. Entraînement selon la revendication 9, **caractérisé en ce qu'**une transmission de la force depuis le dispositif de blocage (8) à l'élément de transmission (52) du côté mené s'effectue au moyen d'un élément démultiplicateur (51) qui est accouplé d'une part au dispositif de blocage (8) et d'autre part à l'élément de transmission (52) du côté mené.

11. Entraînement selon la revendication 10, **caractérisé en ce que** l'élément démultiplicateur est réalisé sous forme de pignon (51) qui est monté sur l'axe d'entraînement (75') du dispositif de blocage (8) et qui engrène avec l'élément de transmission (52) du côté mené, l'élément de transmission (5) du côté mené étant monté sur un axe (53) parallèlement à l'axe d'entraînement (75') du dispositif de blocage (8).

12. Entraînement selon l'une quelconque des revendications précédentes, **caractérisé en ce que** le mécanisme pas à pas (7) est un entraînement à action bilatérale pour générer un mouvement de rotation qui s'effectue au choix à partir d'une position zéro du levier d'entraînement (61) dans l'une ou dans l'autre direction d'entraînement, un élément de transmission (5, 5', 5") du côté mené étant tourné uniquement lorsque le levier d'entraînement (61) se déplace en éloignement de la position zéro, tandis que lors d'un mouvement du levier d'entraînement (61) en direction vers la position zéro, aucune rotation de l'élément de transmission (5, 5', 5") du côté mené n'a lieu.

13. Entraînement selon l'une quelconque des revendications précédentes, **caractérisé en ce que** des forces côté menant sont transmises via au moins un élément (85, 85', 85") du dispositif de blocage (8) à un dispositif d'accouplement (851', 87 ; 851', 87' ; 851", 501") qui est couplé avec l'élément de transmission (5, 5', 5") du côté mené pour transmettre des couples de rotation.

14. Entraînement selon la revendication 13, **caractérisé en ce que** le dispositif d'accouplement (851', 87 ; 851', 87' ; 851", 501") est réalisé de manière à pouvoir être commuté pour un réglage de siège passif manuel, et **en ce que** le dispositif d'accouplement (851', 87 ; 851', 87' ; 851", 501") ferme le flux de force entre l'entraînement (4) et l'élément de transmission (5', 5") du côté mené dans un premier état de commutation non actionné, et interrompt le flux de force entre l'entraînement (4) et l'élément de transmission (5', 5") du côté mené dans un deuxième état de commutation actionné.

15. Entraînement selon l'une ou l'autre des revendications 13 et 14, **caractérisé en ce que** le dispositif d'accouplement comprend un élément ressort (87, 87') d'un seul tenant comportant des éléments à coopération de formes (874) côté mené et des éléments à coopération de formes (872, 872') côté menant.

16. Entraînement selon l'une ou l'autre des revendications 13 et 14, **caractérisé en ce que** pour commuter le dispositif d'accouplement (851', 87 ; 851', 87' ; 851", 501"), il est prévu une douille (84) mobile en translation axiale et un élément de manipulation de découplage (64) en liaison avec celle-ci, et **en ce que** la douille (84) est déplacée axialement à l'encontre de la précontrainte d'un ressort lors d'un actionnement de l'élément de manipulation de découplage (64) et interrompt ici le couplage entre l'entraînement (4) et l'élément de transmission (5) du côté mené.

17. Entraînement selon la revendication 16, **caractérisé en ce que** l'élément de manipulation de découplage est un levier (64) en basculement agencé du côté menant, lors du basculement duquel à l'encontre de la précontrainte, un mouvement de positionnement axial est exercé sur la douille (84) et ainsi une opération de découplage est déclenchée.

18. Entraînement selon l'une ou l'autre des revendications 15 ou 16, **caractérisé en ce qu'**à l'élément de manipulation de découplage (64) est associé un élément de commutation, par exemple un bouton-poussoir intégré dans le levier d'entraînement (61), lors de l'actionnement duquel l'opération de couplage ou de découplage est déclenchée.

19. Entraînement selon l'une quelconque des revendications précédentes, **caractérisé en ce que** l'élément de transmission côté mené est réalisé sous la forme d'un pignon (5, 5', 5") ou d'une vis tangente, qui s'engage dans une crémaillère (3) du deuxième dispositif à rail (1).

20. Entraînement selon l'une quelconque des revendications précédentes, **caractérisé en ce que** l'élément de transmission côté mené est un écrou à broche ou est relié à un écrou à broche qui s'engage dans une broche du deuxième dispositif à rail, s'étendant en direction longitudinale.

21. Entraînement selon l'une quelconque des revendications précédentes, **caractérisé en ce que** l'élément de transmission côté mené est réalisé sous la forme d'une poulie à gorge qui est reliée à un câble tendu en direction longitudinale du deuxième dispositif à rail.

22. Entraînement selon l'une quelconque des revendications précédentes, **caractérisé en ce que** le premier et le deuxième dispositif à rail représentent le rail supérieur (2) et le rail inférieur (1) d'une paire de rails d'un réglage longitudinal de siège.

23. Entraînement manuel continu pour le réglage de siège dans des véhicules automobiles, en utilisant un mécanisme pas à pas (7) pour le réglage de siège, qui transmet une force d'entraînement à au moins un élément de transmission (5', 5") du côté mené, un dispositif de blocage (8) étant agencé dans le flux de force entre le mécanisme pas à pas (7) et l'élément de transmission (5', 5") du côté mené, qui bloque une transmission du couple de rotation côté mené, mais qui permet une transmission du couple de rotation côté menant, **caractérisé par** un dispositif d'accouplement (851', 87 ; 851', 87' ; 851", 501") qui, dans l'état non actionné, ferme le flux de force entre le mécanisme pas à pas (7) et les éléments de transmission (5', 5") du côté mené au moyen de la précontrainte d'un ressort, et qui, dans l'état actionné, interrompt la liaison entre les éléments de transmission (5', 5") du côté menant et le dispositif de blocage (8), de sorte qu'un réglage de siège est possible.

24. Entraînement selon la revendication 23, **caractérisé en ce que** le dispositif d'accouplement comprend des éléments en coopération de formes (852', 872, 872', 852", 502") pour effectuer l'opération d'accouplement.

25. Entraînement selon la revendication 23, **caractérisé en ce que** le dispositif d'accouplement comprend des éléments en coopération de friction pour effectuer l'opération d'accouplement.

26. Entraînement selon l'une quelconque des revendications 23 à 25, **caractérisé en ce que** le dispositif d'accouplement comprend une première portion d'accouplement (872, 872', 501") faisant partie d'un élément de transmission (87, 5") du côté mené et une seconde portion d'accouplement (852', 852") qui fait partie d'un élément (85', 85") du mécanisme pas à pas (7) ou d'un dispositif de blocage (8) couplé au mécanisme pas à pas.

27. Entraînement selon l'une quelconque des revendications 23 à 26, **caractérisé en ce que** le dispositif d'accouplement comprend un élément à ressort (87, 87') d'un seul tenant avec des éléments à coopération de formes côté mené (874) et avec des éléments à coopération de formes côté menant (872, 872').

28. Entraînement selon l'une quelconque des revendications 23 à 27, **caractérisé en ce que** le dispositif d'accouplement est réalisé comme élément à ressort (87, 87') agissant axialement par rapport à l'axe d'entraînement (75).

29. Entraînement selon l'une quelconque des revendications 23 à 27, **caractérisé en ce que** le dispositif d'accouplement est réalisé comme élément à ressort agissant radialement par rapport à l'axe d'entraînement (75).

30. Entraînement selon l'une quelconque des revendications 27 à 29, **caractérisé en ce que** les uns des éléments à coopération de formes (874) du dispositif d'accouplement (87, 87') sont en permanence en liaison avec des éléments à coopération de formes associés (510') d'un élément de transmission (5') côté mené ou d'une pièce faisant partie du mécanisme pas à pas, et **en ce que** les autres éléments à coopération de formes (872, 872') du dispositif d'accouplement (87, 87') peuvent être amenés en liaison par accouplement avec l'autre partie correspondante (851').

31. Entraînement selon l'une quelconque des revendications 27, 28 ou 30, **caractérisé en ce que** l'élément à ressort est réalisé à la manière d'une rondelle-ressort (87, 87') dont la zone élastique est subdivisée en plusieurs segments élastiques séparés (871, 871') présentant des extrémités libres dentées (872, 872'), et **en ce qu'**un contour (874), se distinguant de la forme circulaire, de la surface de base de l'élément à ressort est associé à un élément à coopération de formes (510') de l'élément de transmission (5') du côté mené ou de l'élément du côté menant.

32. Entraînement selon la revendication 31, **caractérisé en ce que** les dentures (872, 872') de segments voisins (871, 871') sont décalées d'une fraction du pas de denture.

33. Entraînement selon l'une ou l'autre des revendications 31 et 32, **caractérisé en ce que** le nombre des segments (871, 871') est pair et supérieur ou égal au nombre "quatre", et **en ce que** les dentures (872, 872') de segments opposés (871a, 871b) ne présentent pas de décalage.

34. Entraînement selon l'une quelconque des revendications 26 à 33, **caractérisé en ce que** dans l'état non actionné, la première portion d'accouplement (501") et la deuxième portion d'accouplement (851") s'engagent l'une dans l'autre sous la précontrainte d'un ressort et peuvent être déplacées axialement, lors d'un actionnement du dispositif de couplage, et être dégagées l'une de l'autre.

35. Entraînement selon l'une quelconque des revendications 23 à 34, **caractérisé en ce que** pour l'actionnement du dispositif d'accouplement est prévu un élément de manipulation de découplage (64) qui est en liaison avec une douille (84) mobile en translation axiale qui, lors d'un actionnement de l'élément de manipulation de découplage (64), est déplacée axialement à l'encontre de la précontrainte d'un ressort et interrompt ici la liaison entre l'entraînement (4) et les éléments de transmission (5, 5') du côté mené.

36. Entraînement selon 1a revendication 35 et l'une quelconque des revendications 27 à 34, **caractérisé en ce que** lors d'un actionnement de l'élément de manipulation de découplage (64), la douille (84) mobile en translation axiale est poussée à l'encontre de la force de l'élément à ressort (87, 87') axialement contre l'élément à ressort (87, 87'), et **en ce que** ses éléments à coopération de formes (872, 872') côté menant viennent ici se dégager hors des éléments à coopération de formes (852') de l'élément d'accouplement associé (851').

37. Entraînement selon les revendications 35 et 36, **caractérisé en ce que** lors d'un actionnement de l'élément de manipulation de découplage (64), la douille (84) mobile en translation axiale est poussée à l'encontre de la force d'un ressort agissant axialement contre un élément de transmission (5") du côté mené, et **en ce que** ce dernier vient ici se dégager hors d'un élément de transmission (851") associé du côté menant.

38. Entraînement selon l'une quelconque des revendications précédentes, **caractérisé en ce que** le dispositif de blocage est réalisé sous la forme d'un dispositif de freinage (8).

39. Entraînement selon l'une quelconque des revendications 1 à 38, **caractérisé en ce que** le dispositif de blocage est réalisé par une transmission autobloquante.

40. Entraînement selon la revendication 39, **caractérisé en ce que** la transmission autobloquante est un mécanisme à plateau oscillant.

41. Utilisation de l'entraînement selon la revendication 23 pour un entraînement manuel continu, comportant un premier et un deuxième dispositif à rail rectiligne ou bombé (1, 2) d'un réglage longitudinal de siège, mobiles en direction longitudinale l'un par rapport à l'autre, le premier dispositif à rail (1) étant relié à un élément de transmission (5', 5") du côté mené de l'entraînement, et cet élément de transmission (5', 5") étant accouplé à une partie s'étendant en direction longitudinale du deuxième dispositif à rail (2), en particulier à une partie dentée (3) s'étendant en direction longitudinale.
